# EUROPEAN PATENT APPLICATION

(11) **EP 4 700 455 A1**
(43) Date of publication of application: **25.02.2026**
(21) Application number: 24839876.0
(22) Date of filing: 02.05.2024
(51) Int. Cl.: G02B 27/01

(54) **ELECTRONIC DEVICE INCLUDING STRUCTURE FOR ADJUSTING DISTANCE BETWEEN HOUSINGS**

(30) Priority: 12.07.2023 KR 20230090692; 09.08.2023 KR 20230104394
(71) Applicant: Samsung Electronics Co., Ltd., Suwon-si, Gyeonggi-do 16677 (KR)
(72) Inventor: KANG, Yoonseok, Suwon-si Gyeonggi-do 16677 (KR)
(74) Representative: Gulde & Partner
(86) International application number: PCT/KR2024/005951
(87) International publication number: WO 2025/014059

(57) **Abstract**

An electronic device is provided. The electronic device comprises: a first housing; a second housing; moving members; a rotating member, which engages with each of the plurality of moving members, can rotate around a rotation axis, and includes at least one first inclined surface inclined with respect to the rotation axis; an adjustment member for rotating the rotating member, the adjustment member including at least one second inclined surface facing the at least one first inclined surface; and a locking structure disposed between the adjustment member and the rotating member, wherein, according to at least one first inclined surface sliding with respect to the at least one second inclined surface, the rotating member moves in the direction parallel to the rotation axis so as to be spaced apart from the locking structure, and rotates, after being spaced from the locking structure, so as to move the plurality of moving members.

## Description

### [Technical Field]

The present disclosure relates to an electronic device including a structure for adjusting a distance between housings.

### [Background Art]

An electronic device may be utilized in various environments. For example, the electronic device may include a head mounted display device that is utilized while being worn on a user's head. In a case of an electronic device worn by the user, the electronic device may include a structure configured to have a shape corresponding to a part of a user's body, so that it may be worn by users having different body types.

### [Disclosure]

### [Technical Solution]

An electronic device is provided. According to an embodiment, the electronic device may comprise a first housing covering a region of a user's body when the electronic device is worn by the user. According to an embodiment, the electronic device may comprise a second housing covering another region of the user's body when the electronic device is worn by the user. According to an embodiment, the electronic device may comprise a plurality of moving members movably coupling the first housing to the second housing. According to an embodiment, the electronic device may comprise a rotating member engaged with each of the plurality of moving members, rotatable based on a rotational axis, and including at least one first inclined surface inclined with respect to the rotational axis. According to an embodiment, the electronic device may comprise an adjusting member, for rotating the rotating member, including at least one second inclined surface facing the at least one first inclined surface. According to an embodiment, the electronic device may comprise a locking structure disposed between the rotating member and the adjusting member and configured to limit the rotation of the rotating member while in contact with the rotating member. According to an embodiment, the rotating member may be configured to be spaced apart from the locking structure, by moving in a direction parallel to the rotational axis, as the at least one first inclined surface slides with respect to the at least one second inclined surface by a force to rotate the adjusting member. According to an embodiment, the rotating member may be configured to move, after being spaced apart from the locking structure, the plurality of moving members by rotating to adjust a distance between the first housing and the second housing.

A head mounted display device (HMD) is provided. According to an embodiment, the head mounted display device may comprise a first housing surrounding a region of a user's body when the head mounted display device is worn by the user. According to an embodiment, the head mounted display device may comprise a second housing surrounding another region of the user's body when the head mounted display device is worn by the user. According to an embodiment, the head mounted display device may comprise a plurality of moving members movably coupling the first housing to the second housing. According to an embodiment, the head mounted display device may comprise a rotating member engaged with each of the plurality of moving members, rotatable based on a rotational axis and including at least one first inclined surface inclined with respect to the rotational axis. According to an embodiment, the head mounted display device may comprise an adjusting member, for rotating the rotating member, including at least one second inclined surface facing the at least one first inclined surface. According to an embodiment, the head mounted display device may comprise a locking structure interposed between the rotating member and the adjusting member and configured to limit the rotation of the rotating member when in contact with the rotating member. According to an embodiment, a state of the rotating member may change from a first state, in which the rotating member is in contact with the locking structure, to a second state, in which the rotating member is spaced apart from the locking structure, by linearly moving toward the plurality of moving members as the at least one first inclined surface slides with respect to the at least one second inclined surface by rotation of the adjusting member. According to an embodiment, the rotating member may be configured to move the plurality of moving members by rotating to adjust a distance between the first housing and the second housing, when the state of the rotating member is the second state.

### [Description of the Drawings]

FIG. 1 is a block diagram of an electronic device in a network environment according to various embodiments.
FIG. 2A is a perspective view of an exemplary electronic device according to an embodiment.
FIG. 2B is a perspective view of an exemplary electronic device according to an embodiment.
FIG. 2C illustrates a state in which an exemplary electronic device according to an embodiment is worn by a user.
FIG. 3 is an exploded perspective view of an exemplary electronic device according to an embodiment.
FIG. 4A indicates an example in which a distance between an exemplary first housing and a second housing according to an embodiment is adjusted.
FIG. 4B is a perspective view illustrating a first adjusting module of an exemplary electronic device according to an embodiment.
FIG. 5A is a perspective view of an exemplary first adjusting module according to an embodiment.
FIG. 5B is an exploded perspective view of an exemplary first adjusting module according to an embodiment.
FIG. 6A is a diagram illustrating a first adjusting module when an exemplary adjusting member according to an embodiment rotates along a first rotational direction.
FIG. 6B is a diagram illustrating a first adjusting module when an exemplary adjusting member according to an embodiment rotates along a first rotational direction.
FIG. 7A is a diagram illustrating a first adjusting module when an exemplary adjusting member according to an embodiment rotates along a second rotational direction.
FIG. 7B is a diagram illustrating a first adjusting module when an exemplary adjusting member according to an embodiment rotates along a second rotational direction.
FIG. 8 is a cross-sectional view illustrating an example of a cross-section of an exemplary adjusting member and a rotating member according to an embodiment.
FIG. 9A is a cross-sectional view illustrating an example in which an exemplary first adjusting module according to an embodiment is cut along line A-A' of FIG. 5A.
FIG. 9B is a cross-sectional view illustrating an example in which an exemplary first adjusting module according to an embodiment is cut.
FIGS. 10A to 10C indicate an example of a method of assembling an exemplary first adjusting module according to an embodiment.

### [Mode for Invention]

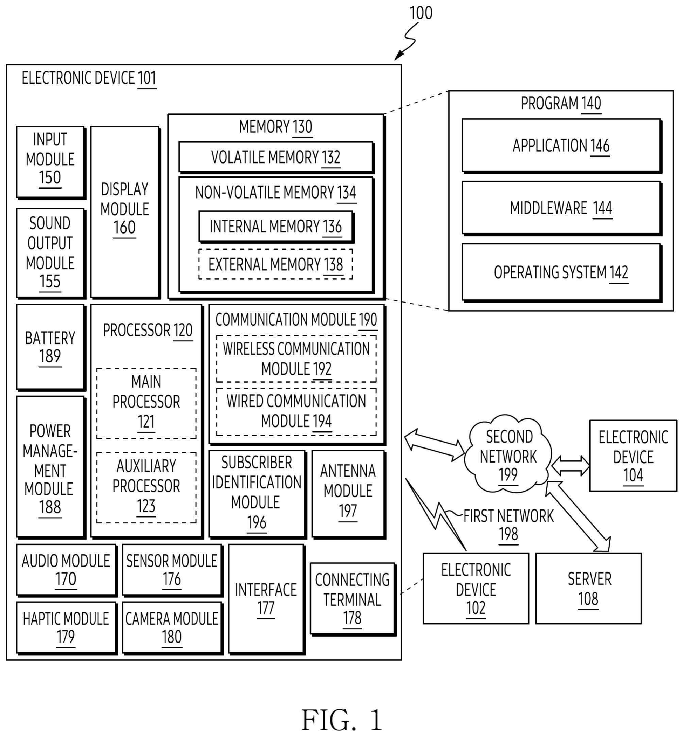

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

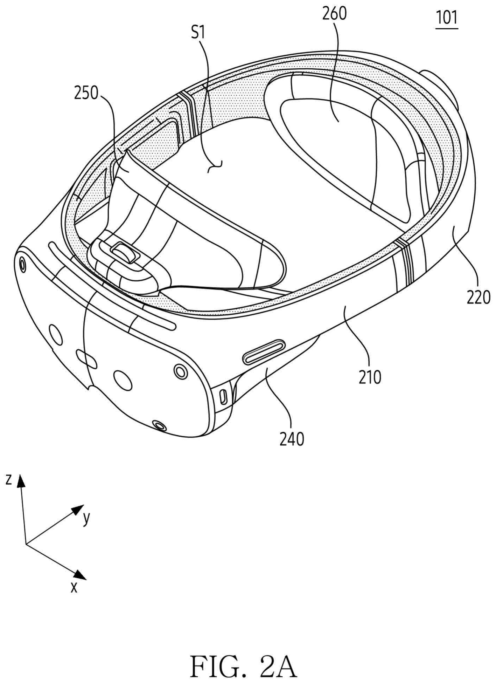

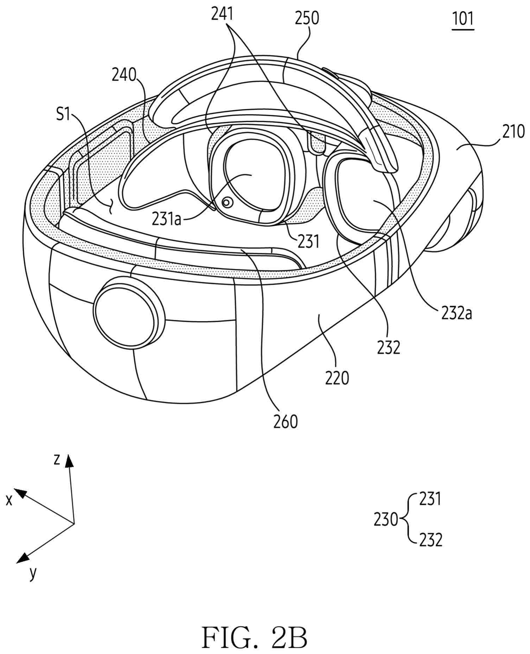

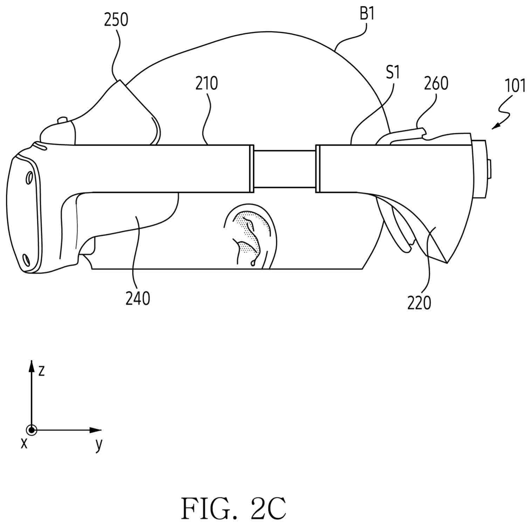

FIG. 2A is a perspective view of an exemplary electronic device according to an embodiment, and FIG. 2B is a perspective view of an exemplary electronic device according to an embodiment. FIG. 2C illustrates a state in which an exemplary electronic device according to an embodiment is worn by a user.

Referring to FIG. 2A, FIG. 2B, and FIG. 2C, according to an embodiment, an electronic device 101 may include a first housing 210, a second housing 220, a plurality of lens supports 230, a cover 240, a first pad 250, and/or a second pad 260. According to an embodiment, the electronic device 101 may be referred to as a wearable device worn on a portion b1 of a user's body. For example, the electronic device 101 may be worn on a user's head.

According to an embodiment, the electronic device 101 may be configured to provide the user with augmented reality (AR), virtual reality (VR), or mixed reality (MR), which is a combination of augmented reality and virtual reality. For example, the electronic device 101 may be configured to provide the user with virtual reality (or a virtual space) based on receiving data related to an image from the outside of the electronic device 101. The virtual reality may be represented based on two dimensions and/or three dimensions. For example, an image provided by the electronic device 101 may include a still image and/or a video for implementing virtual reality. For example, the electronic device 101 may be configured to provide the user with augmented reality by superimposing a virtual object on a real image indicating an external environment of the electronic device 101. The real image may correspond to the external environment. The virtual object may include at least one of text and an image corresponding to various information related to an object included in the real image. However, it is not limited thereto, and the virtual object may include at least one of text and an image corresponding to various information related to another object distinguished from the object included in the real image. For example, the electronic device 101 may be referred to as at least one of a virtual reality (VR) device and a mixed reality (MR) device. For example, since the electronic device 101 may be worn on the user's head, it may be referred to as a head mounted display device (HMD).

According to an embodiment, the first housing 210 may form (or define) a portion of an outer surface of the electronic device 101. The first housing 210 may form (or define) a portion of a space in which various components of the electronic device 101 may be disposed. The first housing 210 may support various components of the electronic device 101. For example, the plurality of lens supports 230, the cover 240, and/or the first pad 250 may be coupled to the first housing 210. The first housing 210 may surround (or cover) the portion b1 of the user's body in a state in which the electronic device 101 is worn by the user. For example, the first housing 210 may at least partially accommodate the portion b1 of the user's body in a state in which the electronic device 101 is worn by the user. For example, the first housing 210 may be in contact with the portion b1 of the user's body in a state in which the electronic device 101 is worn by the user, but is not limited thereto. For example, the first housing 210 may be referred to as a main housing. For example, since the first housing 210 provides an overall framework of the electronic device 101, it may be referred to as a frame.

According to an embodiment, the second housing 220 may form (or define) another portion of the outer surface of the electronic device 101. The second housing 220 may form (or define) another portion of the space in which various components of the electronic device 101 may be disposed. The second housing 220 may support various components of the electronic device 101. For example, the second housing 220 may support the second pad 260. For example, the second pad 260 may be disposed on the second housing 220. The second housing 220 may surround (or cover) the portion b1 of the user's body in a state in which the electronic device 101 is worn by the user. For example, the second housing 220 may at least partially accommodate the portion b1 of the user's body in a state in which the electronic device 101 is worn by the user. For example, the second housing 220 may be in contact with the portion b1 of the user's body in a state in which the electronic device 101 is worn by the user, but is not limited thereto. The second housing 220 may be movable with respect to the first housing 210. For example, the second housing 220 may be movable with respect to the first housing 210 such that the portion b1 of the user's body may be accommodated in a space s1 between the first housing 210 and the second housing 220. For example, the second housing 220 may be movable with respect to the first housing 210 to be close to the first housing 210 or away from the first housing 210. As the second housing 220 is movable with respect to the first housing 210, a size of the space s1 between the first housing 210 and the second housing 220 may be adjusted (or changed) to correspond to a size of the portion b1 of the user's body. For example, the second housing 220 may be referred to as a sub-housing. For example, the second housing 220 may be referred to as a band housing.

According to an embodiment, each of the plurality of lens supports 230 may correspond to a user's eye of the electronic device 101. Each of the plurality of lens supports 230 may face the user's eye in a state in which the electronic device 101 is worn by the user. Each of the plurality of lens supports 230 may be coupled to the first housing 210. For example, a portion of each of the plurality of lens supports 230 may be disposed (or accommodated) inside the first housing 210. For example, another portion of each of the plurality of lens supports 230 may protrude to the outside of the first housing 210. The plurality of lens supports 230 may include a first lens support 231 and a second lens support 232.

According to an embodiment, the first lens support 231 may be movable with respect to the first housing 210 so as to face the user's eye. For example, the first lens support 231 may be movable with respect to the first housing 210 to be close to or away from the second lens support 232. The first lens support 231 may be coupled to a first lens 231a. The first lens 231a may refract (or distort) light emitted from at least one display of the electronic device 101 such that the electronic device 101 may provide virtual reality. The first lens 231a may be exposed to the outside of the first housing 210. The first lens 231a may be disposed outside the first housing 210.

According to an embodiment, the second lens support 232 may be movable with respect to the first housing 210 so as to face the user's eye. For example, the second lens support 232 may be movable with respect to the first housing 210 to be close to or away from the first lens support 231. As the first lens support 231 and the second lens support 232 are movable with respect to each other, a distance between the first lens 231a and a second lens 232a may be adjusted to correspond to a user's inter pupillary distance (IPD). The second lens support 232 may be coupled to the second lens 232a. The second lens 232a may refract (or distort) light emitted from at least one display of the electronic device 101 such that the electronic device 101 may provide virtual reality. The second lens 232a may be exposed to the outside of the first housing 210. The second lens 232a may be disposed outside the first housing 210.

According to an embodiment, the cover 240 may reduce (or suppress) dispersion of light that has passed through the first lens 231a and the second lens 232a to the outside of the cover 240 in a state in which the electronic device 101 is worn by the user. As the cover 240 reduces transmission of light that has passed through the first lens 231a and the second lens 232a to the outside of the cover 240, an environment in which the user of the electronic device 101 may immerse in virtual reality may be provided. The cover 240 may cover (or surround) the portion b1 of the user's body in a state in which the electronic device 101 is worn by the user. For example, the cover 240 may be in contact with the portion b1 of the user's body in a state in which the electronic device 101 is worn by the user. The cover 240 may be disposed on the first housing 210. For example, the cover 240 may be disposed on a surface of the first housing 210 that faces the portion b1 of the user's body in a state in which the electronic device 101 is worn by the user. The cover 240 may be penetrated by the first lens support 231 and the second lens support 232. For example, the cover 240 may include a plurality of holes 241 that accommodate the first lens support 231 and the second lens support 232, respectively. For example, since the cover 240 covers a user's face while the electronic device 101 is worn by the user, it may be referred to as a face cover.

According to an embodiment, the first pad 250 may support the electronic device 101 while the electronic device 101 is worn by the user. The first pad 250 may maintain a position of the electronic device 101 with respect to the portion b1 of the user's body while the electronic device 101 is worn by the user. For example, the first pad 250 may be in contact with a user's forehead in a state in which the electronic device 101 is worn by the user. The first pad 250 may be coupled to the first housing 210. The first pad 250 may be disposed on the first housing 210. According to an embodiment, the first pad 250 may be movable with respect to the first housing 210. For example, the first pad 250 may be rotatable (or tiltable) with respect to the first housing 210. As the first pad 250 is movable with respect to the first housing 210, a posture (or an angle) of the first pad 250 with respect to the first housing 210 may be adjusted (or changed). As the posture of the first pad 250 with respect to the first housing 210 is changed, the first pad 250 may be in stable contact with the user's forehead. For example, since the first pad 250 supports the user's forehead while the electronic device 101 is worn by the user, it may be referred to as a front pad (or a front cushion).

According to an embodiment, the second pad 260 may support the electronic device 101 while the electronic device 101 is worn by the user. The second pad 260 may maintain a position of the electronic device 101 with respect to the portion b1 of the user's body while the electronic device 101 is worn by the user. For example, the second pad 260 may be in contact with a back of the user's head in a state in which the electronic device 101 is worn by the user. The second pad 260 may be coupled to the second housing 220. The second pad 260 may be disposed on the second housing 220. For example, the second pad 260 may be disposed on a surface of the second housing 220 that faces the portion b1 of the user's body in a state in which the electronic device 101 is worn by the user. According to an embodiment, the second pad 260 may be movable with respect to the second housing 220. For example, the second pad 260 may be rotatable (or tiltable) with respect to the second housing 220. As the second pad 260 is movable with respect to the second housing 220, a posture (or an angle) of the second pad 260 with respect to the second housing 220 may be adjusted (or changed). As the posture of the second pad 260 with respect to the second housing 220 is changed, the second pad 260 may be in stable contact with the back of the user's head. For example, since the second pad 260 supports the back of the user's head while the electronic device 101 is worn by the user, it may be referred to as a rear pad (or a rear cushion).

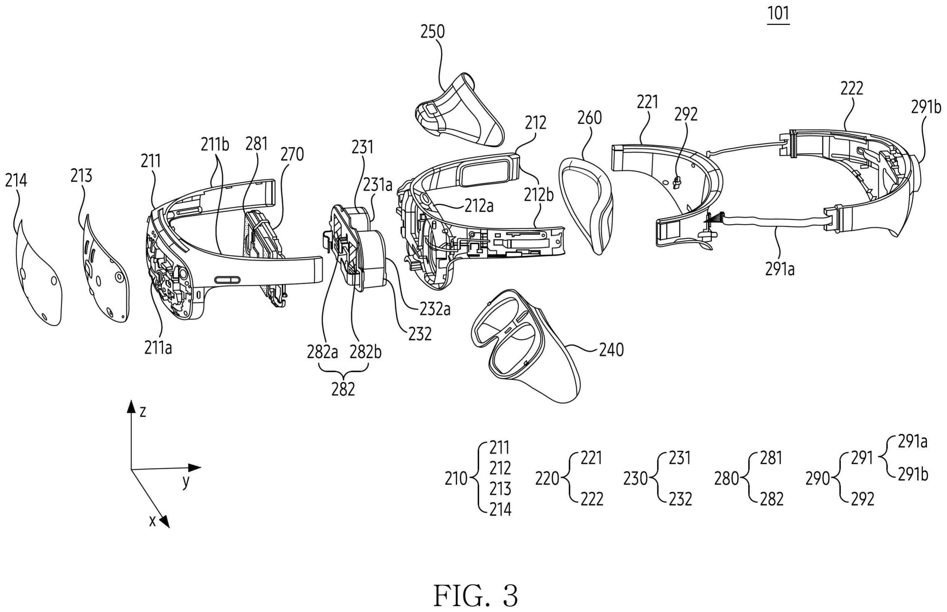

FIG. 3 is an exploded perspective view of an exemplary electronic device according to an embodiment.

Referring to FIG. 3, according to an embodiment, an electronic device 101 may further include a bracket 270, an electronic component 280, and/or a plurality of adjusting modules 290.

According to an embodiment, the bracket 270 may support a component disposed in a first housing 210. For example, the bracket 270 may support a printed circuit board 281. The bracket 270 may be disposed in the first housing 210. For example, the bracket 270 may be surrounded by the first housing 210.

According to an embodiment, the electronic component 280 may implement various functions of the electronic device 101. For example, the electronic component 280 may include the printed circuit board 281 and at least one display 282. However, it is not limited thereto. For example, the electronic component 280 may include various electronic components in addition to the examples described above.

According to an embodiment, the printed circuit board 281 may form (or establish) an electrical connection between electronic components in the electronic device 101. The printed circuit board 281 may support at least a portion of the electronic components in the electronic device 101. For example, the printed circuit board 281 may support a processor (e.g., the processor 120 of FIG. 1) of the electronic device 101. The processor 120 may be disposed on the printed circuit board 281. The printed circuit board 281 may be disposed in the first housing 210. The printed circuit board 281 may be disposed on the bracket 270. For example, the printed circuit board 281 may be disposed on a surface of the bracket 270.

According to an embodiment, the at least one display 282 may be configured to provide visual content. The at least one display 282 may be disposed in the first housing 210. For example, the at least one display 282 may face another surface of the bracket 270 that is opposite to the surface of the bracket 270 on which the printed circuit board 281 is disposed. According to an embodiment, the at least one display 282 may be movable with respect to the first housing 210. For example, the at least one display 282 may include a first display 282a coupled to a first lens support 231, and a second display 282b coupled to a second lens support 232. The first display 282a may be disposed on the first lens support 231. The first display 282a may emit light toward a first lens 231a. The light emitted from the first display 282a may be transmitted to a user by passing through the first lens 231a. The second display 282b may be disposed on the second lens support 232. The second display 282b may emit light toward a second lens 232a. The light emitted from the second display 282b may be transmitted to the user by passing through the second lens 232a. However, it is not limited thereto. For example, the at least one display 282 may include only one display fixed on the other surface of the bracket 270.

According to an embodiment, the plurality of adjusting modules 290 may include a first adjusting module 291 and a second adjusting module 292.

According to an embodiment, the first adjusting module 291 may couple a second housing 220 to the first housing 210 such that the second housing 220 is movable with respect to the first housing 210. A distance between the second housing 220 and the first housing 210 may be adjusted (or changed) by the first adjusting module 291. The first adjusting module 291 may include a band 291a and a first knob 291b. The band 291a may be disposed in the first housing 210 and the second housing 220. The band 291a may extend from the second housing 220 to the first housing 210. The band 291a may be operated through the first knob 291b exposed to the outside of the second housing 220. At least a portion of the band 291a may be exposed to the outside of the electronic device 101 or may be covered by the first housing 210 and the second housing 220, due to movement of the second housing 220 with respect to the first housing 210. For example, as the user adjusts the distance through the knob 291b such that the distance between the first housing 210 and the second housing 220 is increased, at least a portion of the band 291a may be exposed to the outside of the electronic device 101. For example, as the user adjusts the distance through the knob 291b such that the distance between the first housing 210 and the second housing 220 is decreased, at least a portion of the band 291a may be covered by the first housing 210 and the second housing 220.

According to an embodiment, the second adjusting module 292 may couple a second pad 260 to the second housing 220 such that the second pad 260 is movable with respect to the second housing 220. For example, at least a portion of the second adjusting module 292 may be exposed to the outside of the second housing 220.

According to an embodiment, the first housing 210 may include a first case 211, a second case 212, a front panel 213, and/or a visor 214. The first case 211, the second case 212, the front panel 213, and the visor 214 may be coupled to each other. By being coupled to each other, the first case 211, the second case 212, the front panel 213, and the visor 214 may form (or define) the first housing 210.

According to an embodiment, the first case 211 may include a first support portion 211a and/or at least one band portion 211b.

According to an embodiment, the first support portion 211a may face the printed circuit board 281. The printed circuit board 281 may be disposed on (or in) the first support portion 211a. For example, the printed circuit board 281 may be disposed (or interposed) between the first support portion 211a and the bracket 270. For example, a first pad 250 may be disposed on the first support portion 211a.

According to an embodiment, the at least one first band portion 211b may surround (or cover) a portion of a portion (e.g., the portion b1 of the user's body of FIG. 2C) of a user's body in a state in which the electronic device 101 is worn by the user. The at least one first band portion 211b may have a shape that extends from the first support portion 211a. For example, the at least one first band portion 211b may extend in a direction away from the first support portion 211a. For example, the at least one first band portion 211b may include a plurality of first band portions spaced apart from each other, but is not limited thereto.

According to an embodiment, the second case 212 may include a second support portion 212a and/or at least one second band portion 212b.

According to an embodiment, the second support portion 212a may be coupled to the first support portion 211a. For example, a shape of the second support portion 212a may correspond to a shape of the first support portion 211a. The first support portion 211a and the second support portion 212a may provide a space in which components of the electronic device 101 may be disposed, by being coupled to each other. For example, a portion of each of the bracket 270, the printed circuit board 281, and a plurality of lens supports 230 may be disposed between the first support portion 211a and the second support portion 212a. The second support portion 212a may include a plurality of lens openings through which another portion of each of the plurality of lens supports 230 passes. The other portion of each of the plurality of lens supports 230 may be exposed to the outside of the first housing 210 by penetrating the plurality of lens openings. The second support portion 212a may support a first cover 240. For example, the first cover 240 may be disposed on the second support portion 212a.

According to an embodiment, the at least one second band portion 212b may be coupled to the at least one first band portion 211b. For example, a shape of the at least one second band portion 212b may correspond to a shape of the at least one first band portion 211b. For example, the at least one second band portion 212b may include a plurality of second band portions spaced apart from each other, but is not limited thereto. A portion of the band 291a may be disposed in the at least one first band portion 211b and the at least one second band portion 212b. The portion of the band 291a may be covered (or surrounded) by the at least one first band portion 211b and the at least one second band portion 212b.

According to an embodiment, the front panel 213 may cover at least a portion of components in the first housing 210 such that the components in the first housing 210 are not visible from the outside. The front panel 213 may be disposed on the first housing 210. For example, the front panel 213 may be disposed on the first support portion 211a of the first housing 210.

According to an embodiment, the visor 214 may be disposed on the first housing 210. The visor 214 may be disposed on the front panel 213. For example, at least a portion of the visor 214 may be formed of a substantially transparent or substantially translucent material such that a camera (e.g., the camera module 180 of FIG. 1) of the electronic device 101 may receive light from the outside of the electronic device 101, but is not limited thereto.

According to an embodiment, the second housing 220 may include a third case 221 and/or a fourth case 222. The third case 221 and the fourth case 222 may be coupled to each other. By being coupled to each other, the third case 221 and the fourth case 222 may form (or define) the second housing 220.

According to an embodiment, the third case 221 may face the second case 212. The third case 221 may support the second pad 260. The second pad 260 may be disposed on the third case 221. A portion of the second adjusting module 292 may protrude (or be exposed) to the outside of the third case 221.

According to an embodiment, the fourth case 222 may be coupled to the third case 221. Another portion of the band 291a may extend in the third case 221 and the fourth case 222. The knob 291b may protrude to the outside of the fourth case 222.

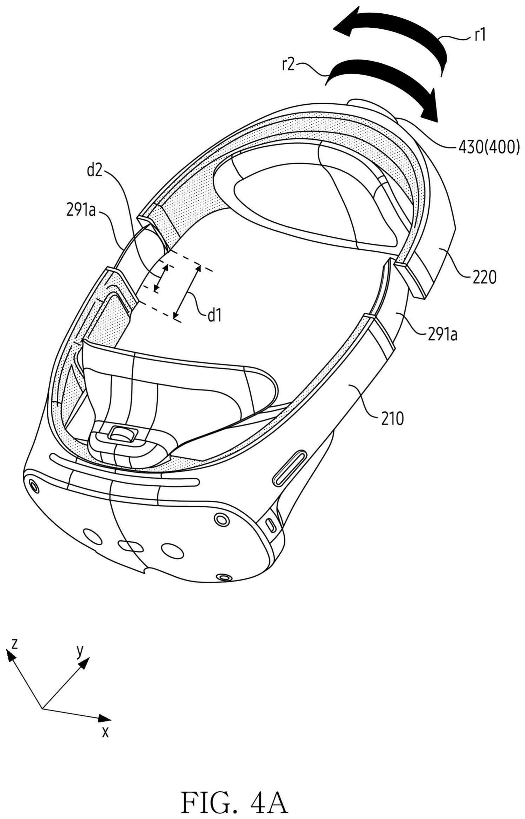

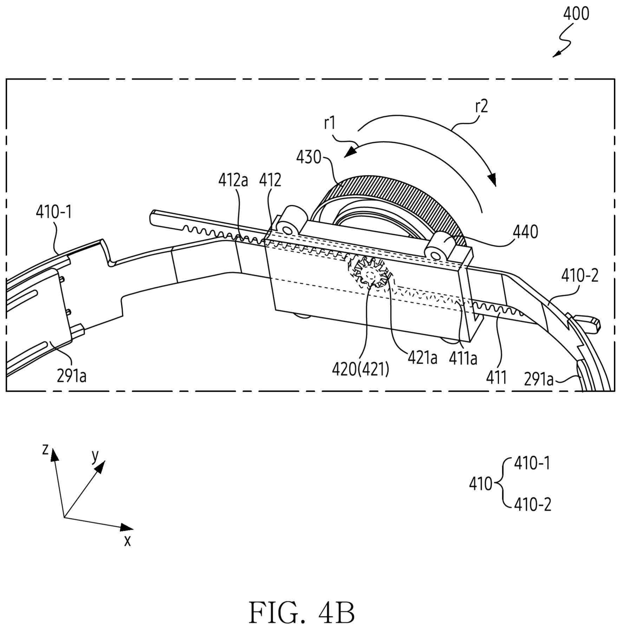

FIG. 4A indicates an example in which a distance between an exemplary first housing and a second housing according to an embodiment is adjusted, and FIG. 4B is a perspective view illustrating a first adjusting module of an exemplary electronic device according to an embodiment, and FIG. 4C is a top view illustrating a first adjusting module of an exemplary electronic device according to an embodiment.

Referring to FIGS. 4A, 4B, and 4C, an electronic device 101 according to an embodiment may include a first housing 210, a second housing 220, and/or a first adjusting module 400 (e.g., the first adjusting module 291 of FIG. 3).

According to an embodiment, the first housing 210 may be movably coupled to the second housing 220. For example, the first housing 210 may be movably coupled to the second housing 220 by the first adjusting module 400. For example, the first housing 210 may be linearly movable with respect to the second housing 220. For example, the first housing 210 may be movable along a direction (e.g., a -y direction) away from the second housing 220 and/or a direction (e.g., a +y direction) approaching the second housing 220. The first housing 210 may cover (or surround) a region of a user's body including an eye while the electronic device 101 is worn by the user.

According to an embodiment, the second housing 220 may be movable with respect to the first housing 210. The second housing 220 may accommodate at least a portion of the first adjusting module 400. The second housing 220 may cover (or surround) another region of the user's body including a back of a head while the electronic device 101 is worn by the user.

According to an embodiment, the first adjusting module 400 may movably couple (or connect) the first housing 210 and the second housing 220. A distance between the first housing 210 and the second housing 220 may be changed by the first adjusting module 400. For example, as the first housing 210 moves relatively with respect to the second housing 220, the distance between the first housing 210 and the second housing 220 may be changed. For example, as the first housing 210 moves in the direction (e.g., the +y direction) approaching the second housing 220, the distance between the first housing 210 and the second housing 220 may be changed from a first distance d1 to a second distance d2. For example, as the first housing 210 moves in the direction (e.g., the -y direction) away from the second housing 220, the distance between the first housing 210 and the second housing 220 may be changed from the second distance d2 to the first distance d1. In the present disclosure, the second distance d2 may be smaller than the first distance d1, but this is for convenience of explanation. For example, the second distance d2 may be greater than the first distance d1. According to an embodiment, the first adjusting module 400 may include a band 291a, a plurality of moving members 410, a rotating member 420, an adjusting member 430, and/or a supporting bracket 440.

According to an embodiment, the band 291a may be coupled to the first housing 210 and the second housing 220. For example, a portion of the band 291a may be movable with the first housing 210 with respect to the second housing 220 by being fastened to the first housing 210, but is not limited thereto.

According to an embodiment, the plurality of moving members 410 may guide movement of the first housing 210 with respect to the second housing 220. The plurality of moving members 410 may movably couple the first housing 210 and the second housing 220. For example, the plurality of moving members 410 may movably couple the first housing 210 and the second housing 220 by being coupled to the band 291a. For example, the plurality of moving members 410 may be movable with the first housing 210 with respect to the second housing 220 by being coupled to the band 291a fastened to the first housing 210, but is not limited thereto. For example, the plurality of moving members 410 may be referred to as rails. According to an embodiment, the plurality of moving members 410 may include a first rack gear 411 and a second rack gear 412.

According to an embodiment, the first rack gear 411 may be engaged with the rotating member 420. The first rack gear 411 may be linearly movable by movement of the rotating member 420. For example, the first rack gear 411 may include a plurality of first rack gear teeth 411a that are engaged with the rotating member 420.

According to an embodiment, the second rack gear 412 may be engaged with the rotating member 420. The second rack gear 412 may be linearly movable by movement of the rotating member 420. For example, the second rack gear 412 may include a plurality of second rack gear teeth 412a that are engaged with the rotating member 420. The second rack gear 412 may face and be spaced apart from the first rack gear 411. For example, the rotating member 420 may be disposed (or positioned) between the first rack gear 411 and the second rack gear 412.

According to an embodiment, the plurality of moving members 410 may include a first moving member 410-1 and a second moving member 410-2. The first moving member 410-1 and the second moving member 410-2 may be movable with respect to each other. For example, the first moving member 410-1 and the second moving member 410-2 may be movable in directions away from each other. For example, the first moving member 410-1 and the second moving member 410-2 may be movable in directions approaching each other. The first moving member 410-1 may be coupled to the first rack gear 411. For example, the first rack gear 411 may be formed on the first moving member 410-1. The second moving member 410-2 may be coupled to the second rack gear 412. For example, the second rack gear 412 may be formed on the second moving member 410-2.

According to an embodiment, the rotating member 420 may adjust the distance between the first housing 210 and the second housing 220. The rotating member 420 may be disposed (or positioned) in the second housing 220. The rotating member 420 may move each of the plurality of moving members 410 by rotating. For example, the rotating member 420 may be engaged with each of the plurality of moving members 410. For example, the rotating member 420 may be engaged with the first rack gear 411 and the second rack gear 412. According to an embodiment, the rotating member 420 may include a pinion gear 421. The pinion gear 421 may be engaged with the first rack gear 411 and the second rack gear 412. For example, the pinion gear 421 may include pinion gear teeth 421a that are engaged with the first rack gear teeth 411a of the first rack gear 411 and the second rack gear teeth 412a of the second rack gear 412. The rotating member 420 may be rotatable with respect to the supporting bracket 440. For example, the rotating member 420 may be movable along a first rotational direction r1 and/or a second rotational direction r2 with respect to the supporting bracket 440.

According to an embodiment, the adjusting member 430 may transmit an external force from the user, for adjusting the distance between the first housing 210 and the second housing 220, to at least a portion of components of the first adjusting module 400. For example, the adjusting member 430 may be exposed to the outside of the second housing 220. The adjusting member 430 may rotate the rotating member 420. For example, the adjusting member 430 may be movable along the first rotational direction r1 and/or the second rotational direction r2 with the rotating member 420 with respect to the supporting bracket 440. For example, when the adjusting member 430 rotates along the first rotational direction r1, the rotating member 420 may be rotatable along the first rotational direction r1 together with the adjusting member 430 by the force transmitted from the adjusting member 430. By the rotation of the rotating member 420 along the first rotational direction r1, each of the plurality of moving members 410 may move closer to each other. For example, by the rotation of the rotating member 420 along the first rotational direction r1, the first rack gear 411 and the second rack gear 412 may move closer to each other. By the rotation of the rotating member 420 along the first rotational direction r1, the first moving member 410-1 coupled to the first rack gear 411 and the second moving member 410-2 coupled to the second rack gear 412 may move closer to each other. As each of the plurality of moving members 410 moves closer to each other, the distance between the first housing 210 and the second housing 220 may be reduced. For example, as the first rack gear 411 and the second rack gear 412 move closer to each other, the distance between the first housing 210 and the second housing 220 may be changed from the first distance d1 to the second distance d2. For example, when the adjusting member 430 rotates along the second rotational direction r2, the rotating member 420 may be rotatable along the second rotational direction r2 together with the adjusting member 430 by the external force transmitted from the adjusting member 430. By the rotation of the rotating member 420 along the second rotational direction r2, each of the plurality of moving members 410 may move away from each other. For example, by the rotation of the rotating member 420 along the second rotational direction r2, the first rack gear 411 and the second rack gear 412 may move away from each other. By the rotation of the rotating member 420 along the second rotational direction r2, the first moving member 410-1 coupled to the first rack gear 411 and the second moving member 410-2 coupled to the second rack gear 412 may move away from each other. As each of the plurality of moving members 410 moves away from each other, the distance between the first housing 210 and the second housing 220 may be increased. For example, as the first rack gear 411 and the second rack gear 412 move away from each other, the distance between the first housing 210 and the second housing 220 may be changed from the second distance d2 to the first distance d1.

According to an embodiment, the supporting bracket 440 may support at least a portion of the components of the first adjusting module 400. For example, a position of the supporting bracket 440 may be maintained while the plurality of moving members 410, the rotating member 420, and/or the adjusting member 430 move. The supporting bracket 440 may be disposed in the second housing 220. For example, the supporting bracket 440 may be fixed to the second housing 220 by being fastened to the second housing 220.

As described above, the electronic device 101 according to an embodiment may provide a structure in which the distance between the first housing 210 and the second housing 220 may be easily changed by rotating the rotating member 420 through the rotation of the adjusting member 430. The first adjusting module 400 may include a structure in which the distance between the first housing 210 and the second housing 220 may be maintained while the external force from the user is interrupted, such that the user may easily operate it. When a size of the first adjusting module 400 becomes excessively large for the structure in which the distance between the first housing 210 and the second housing 220 may be maintained while the external force from the user is interrupted, portability of the electronic device 101 may be reduced or a space in the electronic device 101 may be wasted. Hereinafter, a structure of the first adjusting module 400, which allows the user to easily adjust the distance between the first housing 210 and the second housing 220 while saving a space in the electronic device 101 is described.

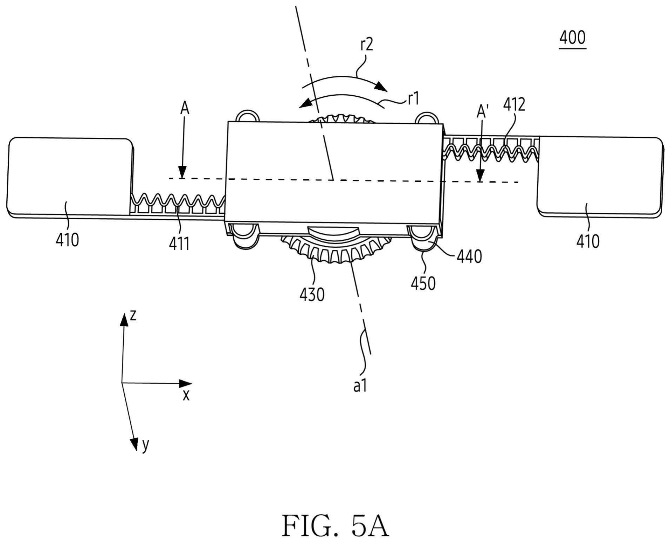

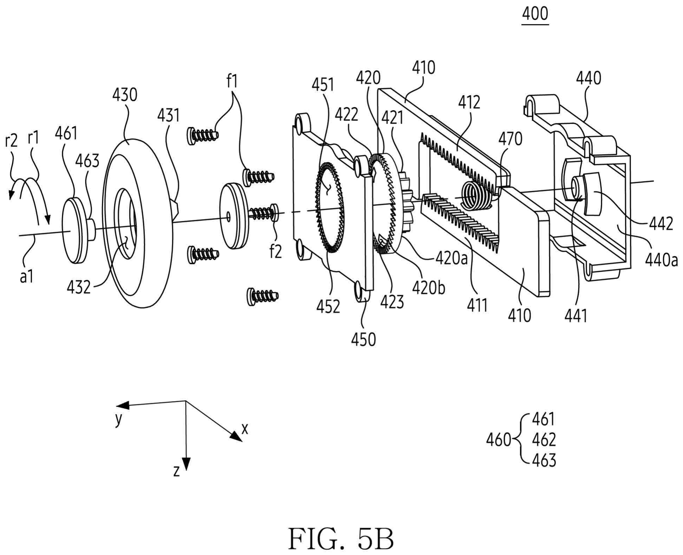

FIG. 5A is a perspective view of an exemplary first adjusting module according to an embodiment, and FIG. 5B is an exploded perspective view of an exemplary first adjusting module according to an embodiment.

Referring to FIGS. 5A and 5B, according to an embodiment, a first adjusting module 400 may further include a locking structure 450, a button 460, and/or a deforming member 470.

According to an embodiment, a rotating member 420 may be rotatable based on a rotational axis a1. For example, the rotating member 420 may be rotatable based on the rotational axis a1 along a first rotational direction r1 and a second rotational direction r2. The rotational axis a1 may be substantially parallel to a first direction (e.g., a -y direction) from an adjusting member 430 toward the rotating member 420. The rotating member 420 may be rotatable based on the rotational axis a1 with respect to a supporting bracket 440 and the locking structure 450. For example, the rotating member 420 may be rotatable with respect to the supporting bracket 440 and the locking structure 450. The rotation of the rotating member 420 may be limited by the locking structure 450.

According to an embodiment, a pinion gear 421 of the rotating member 420 may be disposed on a surface 420a of the rotating member 420. The pinion gear 421 may be formed on the surface 420a of the rotating member 420. The surface 420a of the rotating member 420 may face the supporting bracket 440. The surface 420a of the rotating member 420 may face the first direction (e.g., the -y direction). For example, the pinion gear 421 may protrude from the surface 420a of the rotating member 420 along the first direction (e.g., the -y direction).

According to an embodiment, a state of the rotating member 420 may include a first state of being in contact with (or engaged with) the locking structure 450, and a second state of being spaced apart from (or separated from) the locking structure 450.

According to an embodiment, in the first state of the rotating member 420, the rotating member 420 may not rotate based on the rotational axis a1 by being engaged with the locking structure 450. For example, the rotating member 420 may include a plurality of first locking protrusions 422 that are engaged with the locking structure 450. The plurality of first locking protrusions 422 may be spaced apart from each other along a rotational direction of the rotating member 420. For example, the plurality of first locking protrusions 422 may be spaced apart from each other along a circumferential direction of the rotating member 420. For example, the plurality of first locking protrusions 422 may have a shape inclined with respect to the rotational axis a1, but is not limited thereto. The plurality of first locking protrusions 422 may be disposed on another surface 420b of the rotating member 420. The plurality of first locking protrusions 422 may be formed on the other surface 420b of the rotating member 420. The other surface 420b of the rotating member 420 may be opposite to the surface 420a of the rotating member 420. For example, a second direction (e.g., a +y direction) toward which the other surface 420b of the rotating member 420 faces may be opposite to the first direction (e.g., the -y direction) toward which the surface 420a of the rotating member 420 faces. For example, the plurality of first locking protrusions 422 may be formed by cutting at least a portion of the other surface 420b of the rotating member 420.

According to an embodiment, in the second state of the rotating member 420, the rotating member 420 may be spaced apart from the locking structure 450. For example, the rotating member 420 may be spaced apart from the locking structure 450 by moving along a direction (e.g., the -y direction) parallel to the rotational axis a1 by a force transmitted from the adjusting member 430. For example, the rotating member 420 may be spaced apart from the locking structure 450 by moving along the first direction (e.g., the -y direction) toward a plurality of moving members 410 (or approaching the plurality of moving members 410) by the force transmitted from the adjusting member 430. For example, the rotating member 420 may be spaced apart from the locking structure 450 by moving along the first direction (e.g., the -y direction) toward the supporting bracket 440 (or approaching the supporting bracket 440) by the force transmitted from the adjusting member 430.

According to an embodiment, the rotating member 420 may include at least one guiding groove 423. The at least one guiding groove 423 may accommodate a portion of the rotating member 420. For example, the at least one guiding groove 423 may be in contact with a portion of the rotating member 420. For example, the at least one guiding groove 423 may be formed by at least a portion of the rotating member 420 being recessed inward. For example, the at least one guiding groove 423 may include a plurality of guiding grooves that are spaced apart from each other along the rotational direction of the rotating member 420 (or the circumferential direction of the rotating member 420), but is not limited thereto. For example, the at least one guiding groove 423 may be referred to as an opening or a recess.

According to an embodiment, the adjusting member 430 may be configured to rotate the rotating member 420. For example, the adjusting member 430 may be configured to rotate the rotating member 420 by a force transmitted from the outside of the first adjusting module 400. For example, the adjusting member 430 may rotate the rotating member 420 along the first rotational direction r1 and/or the second rotational direction r2. The adjusting member 430 may linearly move the rotating member 420. For example, the adjusting member 430 may move the rotating member 420 along the first direction (e.g., the -y direction) by sliding with respect to the rotating member 420 by a force to rotate the adjusting member 430. As the rotating member 420 moves in the first direction (e.g., the -y direction) by the force to rotate the adjusting member 430, the state of the rotating member 420 may be changed from the first state to the second state. According to an embodiment, the adjusting member 430 may include at least one guiding protrusion 431 that is in contact with the rotating member 420, and a first opening 432.

According to an embodiment, the at least one guiding protrusion 431 may be in contact with the rotating member 420. The at least one guiding protrusion 431 may be inserted into the rotating member 420. For example, the at least one guiding protrusion 431 may be inserted into the at least one guiding groove 423. The at least one guiding protrusion 431 may maintain a state of being in contact with the rotating member 420 while the adjusting member 430 rotates. For example, when the force to rotate the adjusting member 430 is applied to the adjusting member 430, the at least one guiding protrusion 431 may slide with respect to the rotating member 420. As the force is transmitted to the rotating member 420 through the at least one guiding protrusion 431, the rotating member 420 may be rotatable by the adjusting member 430 or may be linearly movable by the adjusting member 430.

According to an embodiment, the first opening 432 may penetrate the adjusting member 430. The first opening 432 may provide a space in which the button 460 may be inserted into the inside of the adjusting member 430. The first opening 432 may, for example, have a cross-sectional area corresponding to a cross-sectional area of the button 460, but is not limited thereto.

According to an embodiment, the supporting bracket 440 may accommodate the plurality of moving members 410 and the rotating member 420. The supporting bracket 440 may accommodate the plurality of moving members 410 and the rotating member 420. For example, the supporting bracket 440 may accommodate a first rack gear 411 and a second rack gear 412. For example, the supporting bracket 440 may surround (or cover) the first rack gear 411 and the second rack gear 412. According to an embodiment, the supporting bracket 440 may include a protruding portion 441 and a rib 442.

According to an embodiment, the protruding portion 441 may guide coupling between the rotating member 420 and the supporting bracket 440. For example, the protruding portion 441 may be inserted into the rotating member 420. The protruding portion 441 may guide coupling between the rotating member 420 and the deforming member 470. For example, the protruding portion 441 may be inserted into the deforming member 470. The protruding portion 441 may protrude from the supporting bracket 440. For example, the protruding portion 441 may protrude from a surface 440a of the supporting bracket 440 facing the rotating member 420. For example, the protruding portion 441 may extend from the surface 440a of the supporting bracket 440 along the second direction (e.g., the +y direction).

According to an embodiment, the rib 442 may guide the coupling between the rotating member 420 and the supporting bracket 440. For example, the rib 442 may surround (or cover) at least a portion of the rotating member 420. For example, the rib 442 may be bent to have a curvature along the rotational direction of the rotating member 420 so as to surround the rotating member 420. The rib 442 may be open toward the plurality of moving members 410. As the rib 442 has an open shape along the plurality of moving members 410, the rotating member 420, which is at least partially covered by the rib 442, may be engaged with each of the plurality of moving members 410.

According to an embodiment, the locking structure 450 may limit the rotation of the rotating member 420. By limiting the rotation of the rotating member 420, the locking structure 450 may limit movement of each of the plurality of moving members 410. As the movement of each of the plurality of moving members 410 is limited, a distance between a first housing (e.g., the first housing 210 of FIG. 4A) and a second housing (e.g., the second housing 220 of FIG. 4A) may be maintained (or fixed) in the second state of the rotating member 420 in which the locking structure 450 and the rotating member 420 are engaged. The locking structure 450 may be disposed between the adjusting member 430 and the rotating member 420. The locking structure 450 may be coupled to the supporting bracket 440. For example, the locking structure 450 may be fastened to the supporting bracket 440 by at least one fastening member f1. For example, as the locking structure 450 is fastened to the supporting bracket 440, a position of the locking structure 450 may be maintained (or fixed) while the plurality of moving members 410, the rotating member 420, the adjusting member 430, and/or the button 460 move. According to an embodiment, the locking structure 450 may include a second opening 451 and a plurality of second locking protrusions 452.

According to an embodiment, the second opening 451 may provide a passage through which a portion of the adjusting member 430 may pass. The second opening 451 may penetrate the locking structure 450. The locking structure 450 may be penetrated by a portion of the adjusting member 430. For example, the at least one guiding protrusion 431 of the adjusting member 430 may penetrate the locking structure 450 by being inserted into the second opening 451. For example, the at least one guiding protrusion 431 may be accommodated in the second opening 451.

According to an embodiment, the plurality of second locking protrusions 452 may be configured to limit the rotation of the rotating member 420. The plurality of second locking protrusions 452 may have a shape corresponding to a shape of the plurality of first locking protrusions 422. The plurality of second locking protrusions 452 may be arranged with respect to the plurality of first locking protrusions 422. For example, the plurality of second locking protrusions 452 may be spaced apart along the rotational direction of the rotating member 420 (or a circumferential direction of the second opening 451). The plurality of second locking protrusions 452 may be engaged with the plurality of first locking protrusions 422 in the first state of the rotating member 420. The plurality of second locking protrusions 452 may be disposed in the second opening 451. For example, the plurality of second locking protrusions 452 may be spaced apart from each other along the second opening 451.

According to an embodiment, the button 460 may change the state of the rotating member 420. For example, the button 460 may be movable with respect to the adjusting member 430 along the first direction (e.g., the -y direction) and/or the second direction (e.g., the +y direction) opposite to the first direction (e.g., the -y direction). For example, the button 460 may be linearly movable along the first direction (e.g., the -y direction) and/or the second direction (e.g., the +y direction). The button 460 may penetrate the adjusting member 430. The button 460 may be at least partially inserted into the adjusting member 430. The button 460 may be in contact with the rotating member 420. The button 460 may move the rotating member 420 along the first direction (e.g., the -y direction) by moving along the first direction (e.g., the -y direction). As the rotating member 420 moves along the first direction (e.g., the -y direction) by the button 460, the state of the rotating member 420 may be changed from the first state to the second state.

According to an embodiment, the button 460 may obtain a first part 461, a second part 462, and/or a connecting part 463.

According to an embodiment, at least a portion of the first part 461 may be exposed to the outside of the adjusting member 430. The first part 461 may be at least partially surrounded (or covered) by the adjusting member 430. The first part 461 may have a larger cross-sectional area than the connecting part 463. For example, the first part 461 may have a first cross-sectional area.

According to an embodiment, the second part 462 may be in contact with the rotating member 420. For example, the second part 462 may be in contact with the other surface 420b of the rotating member 420. The second part 462 may have a larger cross-sectional area than the connecting part 463. For example, the second part 462 may have the first cross-sectional area, which is the cross-sectional area of the first part 461. The second part 462 may be spaced apart from the first part 461. For example, the second part 462 may be spaced apart from the first part 461 along the first direction (e.g., the -y direction).

According to an embodiment, the connecting part 463 may connect the first part 461 to the second part 462. For example, the connecting part 463 may be in contact with the first part 461 and the second part 462. For example, the connecting part 463 may be formed integrally with the first part 461, but is not limited thereto. The connecting part 463 and the first part 461 may be coupled to the second part 462 through at least one fastening member f2. For example, as the connecting part 463 and the second part 462 are coupled through the fastening member f2 after the connecting part 463 and the first part 461 are inserted through the first opening 432 of the adjusting member 430, coupling between the button 460 and the adjusting member 430 may be completed. A cross-sectional area of the connecting part 463 may be smaller than a cross-sectional area of each of the first part 461 and the second part 462. For example, the connecting part 463 may have a second cross-sectional area that is smaller than the first cross-sectional area.

According to an embodiment, the deforming member 470 may restore a position of the rotating member 420. The deforming member 470 may restore the state of the rotating member 420 from the second state to the first state. For example, the deforming member 470 may press the rotating member 420 in the second direction (e.g., the +y direction). For example, the deforming member 470 may apply a force in the second direction (e.g., the +y direction) to the rotating member 420. For example, as the force applied to the rotating member 420 through the adjusting member 430 (or the button 460) is removed, the deforming member 470 may move the rotating member 420 in the second direction (e.g., +y direction). As the rotating member 420 moves in the second direction (e.g., +y direction) by the deforming member 470, the state of the rotating member 420 may be restored from the second state of being spaced apart from the locking structure 450 to the first state of being engaged with the locking structure 450.

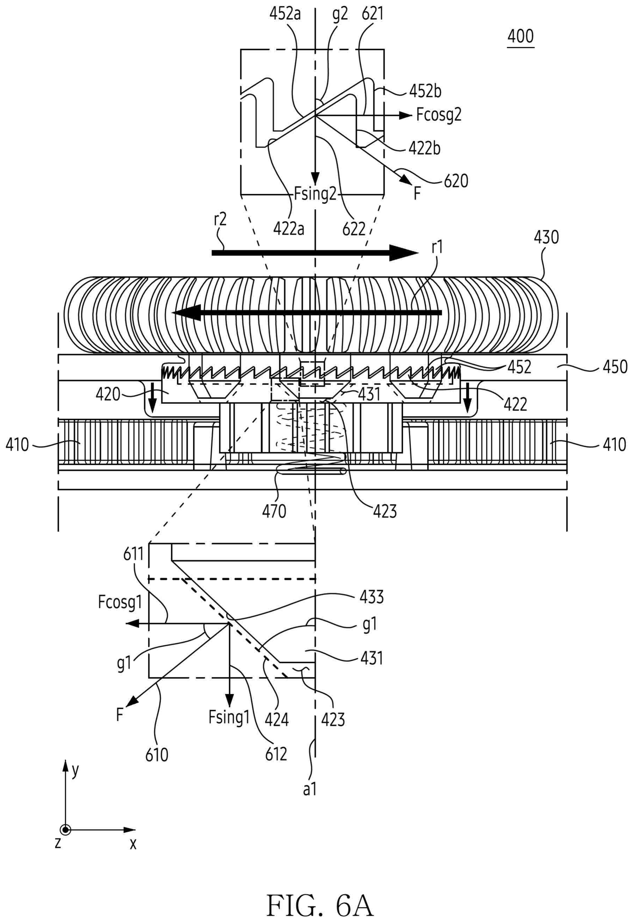

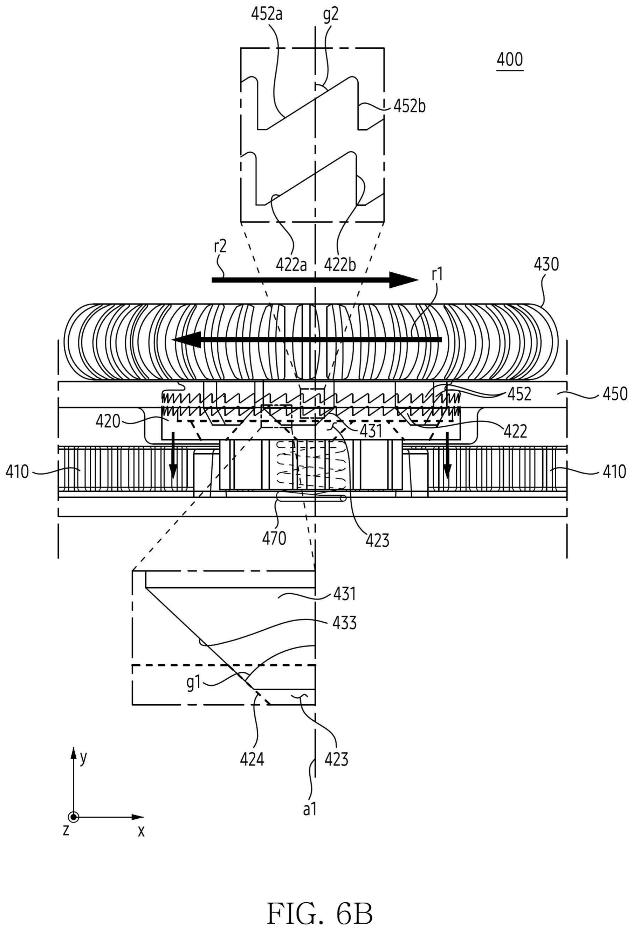

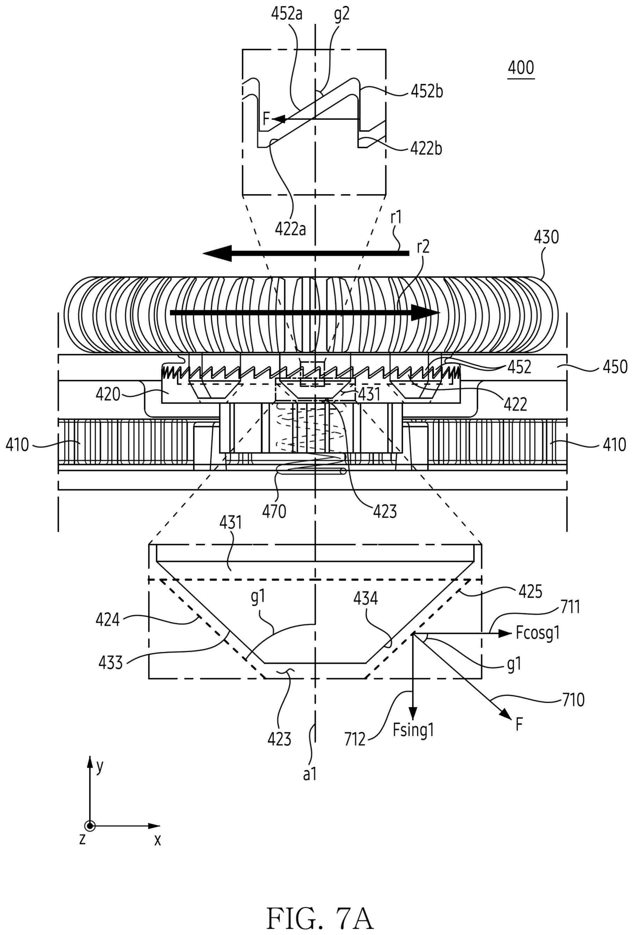

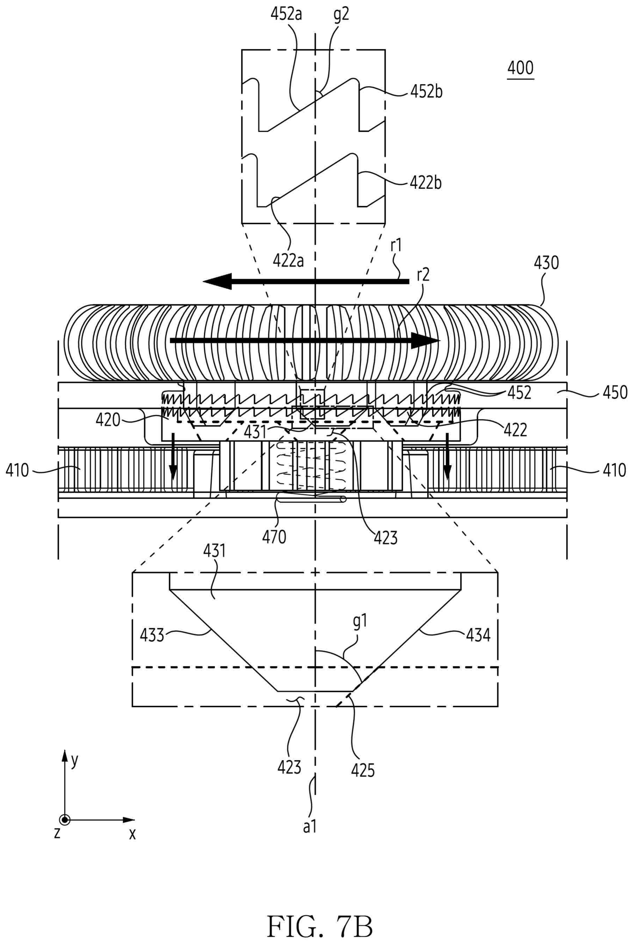

For example, a force from the user to rotate the adjusting member 430 along the first rotational direction r1 and/or the second rotational direction r2 may be transmitted to the adjusting member 430. As the force is transmitted to the adjusting member 430, the rotating member 420 slides with respect to the adjusting member 430, so that the rotating member 420 may move linearly. The linear movement of the rotating member 420 due to the force to rotate the adjusting member 430 may be described through FIGS. 6A, 6B, 7A, and/or 7B.

FIG. 6A is a diagram illustrating a first adjusting module when an exemplary adjusting member according to an embodiment rotates along a first rotational direction, and FIG. 6B is a diagram illustrating a first adjusting module when an exemplary adjusting member according to an embodiment rotates along a first rotational direction.

FIG. 6A indicates a first state of a rotating member 420 in which the rotating member 420 is engaged with a locking structure 450, and FIG. 6B indicates a second state of the rotating member 420 in which the rotating member 420 is spaced apart from the locking structure 450.

Referring to FIGS. 6A and 6B, according to an embodiment, the rotating member 420 may further include at least one first inclined surface 424. The at least one first inclined surface 424 may be in contact with an adjusting member 430 while the adjusting member 430 rotates along a first rotational direction r1. The at least one first inclined surface 424 may be inclined with respect to a rotational axis a1. The at least one first inclined surface 424 may have an inclination with respect to the rotational axis a1. For example, a first angle g1 between the at least one first inclined surface 424 and the rotational axis a1 may be an acute angle, but is not limited thereto. The at least one first inclined surface 424 may be disposed in at least one guiding groove 423. For example, the at least one first inclined surface 424 may be formed in the at least one guiding groove 423. For example, the number of the at least one first inclined surface 424 may be substantially the same as the number of the at least one guiding groove 423, but is not limited thereto.

According to an embodiment, the adjusting member 430 may further include at least one second inclined surface 433. The at least one second inclined surface 433 may face the at least one first inclined surface 424 of the rotating member 420. For example, the at least one second inclined surface 433 may be in contact with the at least one first inclined surface 424 while the adjusting member 430 rotates along the first rotational direction r1. For example, the at least one second inclined surface 433 may be substantially parallel to the at least one first inclined surface 424. The at least one second inclined surface 433 may be inclined with respect to the rotational axis a1. The at least one second inclined surface 433 may have an inclination with respect to the rotational axis a1. For example, the first angle g1 between the at least one second inclined surface 433 and the rotational axis a1 may be an acute angle, but is not limited thereto. The at least one second inclined surface 433 may be disposed on at least one guiding protrusion 431. For example, the at least one second inclined surface 433 may be formed on the at least one guiding protrusion 431. For example, the number of the at least one second inclined surface 433 may be substantially the same as the number of the at least one guiding protrusion 431, but is not limited thereto.

According to an embodiment, each of a plurality of first locking protrusions 422 may have a shape inclined with respect to the rotational axis a1. For example, each of the plurality of first locking protrusions 422 may include a first guide surface 422a and a first contact surface 422b.

According to an embodiment, the first guide surface 422a may be in contact with the locking structure 450 in the first state of the rotating member 420. The first guide surface 422a may be inclined with respect to the rotational axis a1. The first guide surface 422a may be inclined with respect to the rotational axis a1. The first guide surface 422a may have an inclination with respect to the rotational axis a1. For example, a second angle g2 between the first guide surface 422a and the rotational axis a1 may be an acute angle, but is not limited thereto. The second angle g2 may be different from the first angle g1. For example, the second angle g2 may be smaller than the first angle g1, but is not limited thereto. The first guide surface 422a may be formed on each of the plurality of first locking protrusions 422. For example, the number of the first guide surfaces 422a may be substantially the same as the number of the plurality of first locking protrusions 422.

According to an embodiment, the first contact surface 422b may be inclined with respect to the first guide surface 422a. For example, the first contact surface 422b may have a shape that is substantially parallel to the rotational axis a1. As the first contact surface 422b has the shape parallel to the rotational axis a1, it may limit rotation of the rotating member 420 along a second rotational direction r2. However, it is not limited thereto. The first contact surface 422b may be formed on each of the plurality of first locking protrusions 422. For example, the number of the first contact surfaces 422b may be substantially the same as the number of the plurality of first locking protrusions 422.

According to an embodiment, each of a plurality of second locking protrusions 452 of the locking structure 450 may have a shape inclined with respect to the rotational axis a1. For example, each of the plurality of second locking protrusions 452 may include a second guide surface 452a and a second contact surface 452b.

According to an embodiment, the second guide surface 452a may be in contact with the first guide surface 422a in the first state of the rotating member 420. The second guide surface 452a may face the first guide surface 422a in the first state of the rotating member 420. For example, the second guide surface 452a may be parallel to the first guide surface 422a. The second guide surface 452a may be inclined with respect to the rotational axis a1. The second guide surface 452a may be inclined with respect to the rotational axis a1. The second guide surface 452a may have an inclination with respect to the rotational axis a1. For example, a second angle g2 between the second guide surface 452a and the rotational axis a1 may be an acute angle, but is not limited thereto. The second guide surface 452a may be formed on each of the plurality of second locking protrusions 452. For example, the number of the second guide surfaces 452a may be substantially the same as the number of the plurality of second locking protrusions 452.

According to an embodiment, the second contact surface 452b may be in contact with the first contact surface 422b in the first state of the rotating member 420. The second contact surface 452b may face the first contact surface 422b in the first state of the rotating member 420. For example, the second contact surface 452b may be parallel to the first contact surface 422b. The second contact surface 452b may be inclined with respect to the second guide surface 452a. For example, the second contact surface 452b may have a shape that is substantially parallel to the rotational axis a1. As the second contact surface 452b has the shape parallel to the rotational axis a1, it may limit rotation of the rotating member 420 along the second rotational direction r2, but is not limited thereto. The second contact surface 452b may be formed on each of the plurality of first locking protrusions 422. For example, the number of the second contact surfaces 452b may be substantially the same as the number of the plurality of first locking protrusions 422.

According to an embodiment, in the first state of the rotating member 420, a force to rotate the adjusting member 430 along the first rotational direction r1 may be transmitted to the adjusting member 430. When a force to rotate the adjusting member 430 along the first rotational direction r1 is applied to the adjusting member 430, the at least one second inclined surface 433 of the adjusting member 430 may slide with respect to the at least one first inclined surface 424 of the rotating member 420. While the at least one second inclined surface 433 slides with respect to the at least one first inclined surface 424, the first guide surface 422a of each of the plurality of first locking protrusions 422 of the rotating member 420 may slide with respect to the second guide surface 452a of the plurality of second locking protrusions 452 of the locking structure 450. As the at least one second inclined surface 433 slides with respect to the at least one first inclined surface 424, the rotating member 420 may move along a first direction (e.g., a -y direction). The rotating member 420 may be spaced apart from the locking structure 450 by linearly moving along the first direction (e.g., the -y direction) by the sliding between the at least one second inclined surface 433 and the at least one first inclined surface 424. For example, as the rotating member 420 moves along the first direction (e.g., the -y direction), engagement between the plurality of first locking protrusions 422 and the plurality of second locking protrusions 452 may be released. As the engagement between the plurality of first locking protrusions 422 and the plurality of second locking protrusions 452 is released, a state of the rotating member 420 may be changed from the first state to the second state. The rotating member 420 may linearly move away from the locking structure 450 through the force to rotate the adjusting member 430 along the first rotational direction r1, and then may rotate along the first rotational direction r1 with the adjusting member 430. Since the rotating member 420 engaged with a plurality of moving members 410 rotates along the first rotational direction r1, a distance between a first housing (e.g., the first housing 210 of FIG. 4A) and a second housing (e.g., the second housing 220 of FIG. 4A) may be changed (or adjusted). For example, the distance between the first housing 210 and the second housing 220 may be changed (or adjusted) from a first distance (e.g., the first distance d1 of FIG. 4A) to a second distance (e.g., the second distance d2 of FIG. 4A) by the rotation of the rotating member 420, which is engaged with the plurality of moving members 410, along the first rotational direction r1.

According to an embodiment, when the force to rotate the adjusting member 430 along the first rotational direction r1 is removed, the state of the rotating member 420 may be changed from the second state to the first state. For example, when the force to rotate the adjusting member 430 along the first rotational direction r1 is removed, the rotating member 420 may move along a second direction (e.g., a +y direction) by a deforming member 470. As the rotating member 420 moves along the second direction (e.g., the +y direction) by the deforming member 470, the plurality of first locking protrusions 422 of the rotating member 420 may be in contact with the plurality of second locking protrusions 452 of the locking structure 450. As the plurality of first locking protrusions 422 and the plurality of second locking protrusions 452 are in contact, the state of the rotating member 420 may be changed from the second state to the first state. Since the rotation of the rotating member 420 is limited while the plurality of first locking protrusions 422 and the plurality of second locking protrusions 452 are engaged with each other, the distance between the first housing 210 and the second housing 220 may be maintained (or fixed).

According to an embodiment, while the state of the rotating member 420 is changed from the first state to the second state, the rotating member 420 may linearly move without rotating with respect to the locking structure 450. For example, while the state of the rotating member 420 is in the first state, when the force to rotate the adjusting member 430 along the first rotational direction r1 is applied to the adjusting member 430, a first force 610 may be transmitted to the rotating member 420 through the at least one second inclined surface 433 of the adjusting member 430. The first force 610 may include a first rotational force component 611 to rotate the rotating member 420 along the first rotational direction r1, and a first linear force component 612 to linearly move the rotating member 420 in the first direction (e.g., the -y direction). While the first force 610 is applied to the rotating member 420, the rotating member 420 may receive a second force 620 from the locking structure 450 through the first guide surface 422a, due to contact between the rotating member 420 and the locking structure 450,. The second force 620 may be a reaction force of a force transmitted to the locking structure 450 from the adjusting member 430. Magnitude of the second force 620 may be substantially the same as magnitude of the first force 610. The second force 620 may include a second rotational force component 621 to rotate the rotating member 420 along the second rotational direction r2, and a second linear force component 622 to move the rotating member 420 in the first direction (e.g., the -y direction). Since the second angle g2 is smaller than the first angle g1, magnitude of the first rotational force component 611 may be smaller than magnitude of the second rotational force component 621. Since the magnitude of the first rotational force component 611 is smaller than the magnitude of the second rotational force component 621, the rotation of the rotating member 420 along the first rotational direction r1 may be limited while the plurality of first locking protrusions 422 are in contact with the plurality of second locking protrusions 452. Since the rotating member 420 linearly moves without rotating with respect to the locking structure 450 while the plurality of first locking protrusions 422 and the plurality of second locking protrusions 452 are in contact, generation of noise may be reduced (or suppressed) while the distance between the first housing 210 and the second housing 220 is being changed. For example, in a case that the rotating member 420 rotates with respect to the locking structure 450 while the plurality of first locking protrusions 422 and the plurality of second locking protrusions 452 are in contact, noise may be generated as the plurality of first locking protrusions 422 relatively moves with respect to the plurality of second locking protrusions 452. For example, in a case that the rotating member 420 rotates with respect to the locking structure 450 while the plurality of first locking protrusions 422 and the plurality of second locking protrusions 452 are in contact, damage to the first adjusting module 400 may occur as the plurality of first locking protrusions 422 relatively moves with respect to the plurality of second locking protrusions 452. Since the rotating member 420 may linearly move along the first direction (e.g., the -y direction) without rotating while the state of the rotating member 420 is changed from the first state to the second state, the first adjusting module 400 according to an embodiment may provide a structure in which noise and damage to the first adjusting module 400 are reduced.

According to an embodiment, while the adjusting member 430 rotates along the second rotational direction r2, it may be spaced apart from the at least one first inclined surface 424 of the rotating member 420 and the at least one second inclined surface 433 of the adjusting member 430. For example, a mechanism when the adjusting member 430 rotates along the second rotational direction r2 may be described through FIGS. 7A and 7B.

FIG. 7A is a diagram illustrating a first adjusting module when an exemplary adjusting member according to an embodiment rotates along a second rotational direction, and FIG. 7B is a diagram illustrating a first adjusting module when an exemplary adjusting member according to an embodiment rotates along a second rotational direction.

FIG. 7A indicates a first state of a rotating member 420 in which the rotating member 420 is engaged with a locking structure 450, and FIG. 7B indicates a second state of the rotating member 420 in which the rotating member 420 is spaced apart from the locking structure 450.

Referring to FIGS. 7A and 7B, according to an embodiment, the rotating member 420 may further include at least one third inclined surface 425. The at least one third inclined surface 425 may be in contact with an adjusting member 430 while the adjusting member 430 rotates along a second rotational direction r2. The at least one third inclined surface 425 may be spaced apart from the adjusting member 430 while the adjusting member 430 rotates along a first rotational direction r1. For example, the at least one third inclined surface 425 may be spaced apart from at least one guiding protrusion 431 of the adjusting member 430 while the adjusting member 430 rotates along the first rotational direction r1. The at least one third inclined surface 425 may be inclined with respect to a rotational axis a1 and at least one first inclined surface 424. For example, the at least one third inclined surface 425 may be symmetrical with respect to the at least one first inclined surface 424, based on the rotational axis a1. For example, an angle between the at least one third inclined surface 425 and the rotational axis a1 may be a first angle g1, but is not limited thereto. For example, the angle between the at least one third inclined surface 425 and the rotational axis a1 may be different from the first angle g1. The at least one third inclined surface 425 may be disposed in at least one guiding groove 423. For example, the at least one third inclined surface 425 may be formed in the at least one guiding groove 423. For example, the number of the at least one third inclined surface 425 may be substantially the same as the number of the at least one guiding groove 423, but is not limited thereto.

According to an embodiment, at least one fourth inclined surface 434 of the adjusting member 430 may face the at least one third inclined surface 425 of the rotating member 420. For example, the at least one fourth inclined surface 434 may be in contact with the at least one fourth inclined surface 434 while the adjusting member 430 rotates along the second rotational direction r2. The at least one fourth inclined surface 434 may be in contact with the adjusting member 430 while the adjusting member 430 rotates along the second rotational direction r2. The at least one fourth inclined surface 434 may be spaced apart from the at least one third inclined surface 425 while the adjusting member 430 rotates along the first rotational direction r1. The at least one fourth inclined surface 434 may be inclined with respect to the rotational axis a1 and at least one second inclined surface 433. For example, the at least one fourth inclined surface 434 may be symmetrical with respect to the at least one second inclined surface 433, based on the rotational axis a1. For example, an angle between the at least one fourth inclined surface 434 and the rotational axis al may be the first angle g1, but is not limited thereto. For example, the angle between the at least one fourth inclined surface 434 and the rotational axis a1 may be different from the first angle g1. The at least one fourth inclined surface 434 may be disposed on the at least one guiding protrusion 431. For example, the at least one third inclined surface 425 may be formed on the at least one guiding protrusion 431. For example, the number of the at least one fourth inclined surface 434 may be substantially the same as the number of the at least one guiding protrusion 431, but is not limited thereto.

According to an embodiment, in the first state of the rotating member 420, a force to rotate the adjusting member 430 along the second rotational direction r2 may be transmitted to the adjusting member 430. When the force to rotate the adjusting member 430 along the second rotational direction r2 is applied to the adjusting member 430, the at least one fourth inclined surface 434 of the adjusting member 430 may slide with respect to the at least one third inclined surface 425 of the rotating member 420. While the at least one fourth inclined surface 434 slides with respect to the at least one third inclined surface 425, a first contact surface 422b of each of a plurality of first locking protrusions 422 of the rotating member 420 may slide with respect to a second contact surface 452b of a plurality of second locking protrusions 452 of the locking structure 450. As the at least one fourth inclined surface 434 slides with respect to the at least one third inclined surface 425, the rotating member 420 may move along a first direction (e.g., a -y direction). The rotating member 420 may be spaced apart from the locking structure 450 by linearly moving along the first direction (e.g., the -y direction) by the sliding between the at least one fourth inclined surface 434 and the at least one third inclined surface 425. For example, as the rotating member 420 moves along the first direction (e.g., the -y direction), engagement between the plurality of first locking protrusions 422 and the plurality of second locking protrusions 452 may be released. As the engagement between the plurality of first locking protrusions 422 and the plurality of second locking protrusions 452 is released, a state of the rotating member 420 may be changed from the first state to the second state. The rotating member 420 may linearly move away from the locking structure 450 through the force to rotate the adjusting member 430 along the second rotational direction r2, and then may rotate along the second rotational direction r2 with the adjusting member 430. Since the rotating member 420 engaged with a plurality of moving members 410 rotates along the second rotational direction r2, a distance between a first housing (e.g., the first housing 210 of FIG. 4A) and a second housing (e.g., the second housing 220 of FIG. 4A) may be changed (or adjusted). For example, the distance between the first housing 210 and the second housing 220 may be changed (or adjusted) from a second distance (e.g., the second distance d2 of FIG. 4A) to a first distance (e.g., the first distance d1 of FIG. 4A) by rotation of the rotating member 420, which is engaged with the plurality of moving members 410, along the second rotational direction r2.

According to an embodiment, when the force to rotate the adjusting member 430 along the second rotational direction r2 is removed, the state of the rotating member 420 may be changed from the second state to the first state. For example, when the force to rotate the adjusting member 430 along the second rotational direction r2 is removed, the rotating member 420 may move along a second direction (e.g., a +y direction) by a deforming member 470. As the rotating member 420 moves along the second direction (e.g., the +y direction) by the deforming member 470, the plurality of first locking protrusions 422 of the rotating member 420 may be in contact with the plurality of second locking protrusions 452 of the locking structure 450. Since the rotation of the rotating member 420 is limited while the plurality of first locking protrusions 422 and the plurality of second locking protrusions 452 are engaged with each other, and therefore, the distance between the first housing 210 and the second housing 220 may be maintained (or fixed).

According to an embodiment, while the state of the rotating member 420 is in the first state, when the force to rotate the adjusting member 430 along the second rotational direction r2 is applied to the adjusting member 430, a third force 710 may be transmitted to the rotating member 420 through the at least one fourth inclined surface 434 of the adjusting member 430. The third force 710 may include a third rotational force component 711 to rotate the rotating member 420 along the second rotational direction r2, and a third linear force component 712 to linearly move the rotating member 420 in the first direction (e.g., the -y direction). While a first force 610 is applied to the rotating member 420, the rotating member 420 may receive a fourth force 720 from the locking structure 450 through the first contact surface 422b, due to contact between the rotating member 420 and the locking structure 450. The fourth force 720 may be a reaction force of a force transmitted to the locking structure 450 from the adjusting member 430. Magnitude of the fourth force 720 may be substantially the same as magnitude of the third force 710. The fourth force 720 may include a component that attempts to rotate the rotating member 420 along the first rotational direction r1. Since the first angle g1 between the at least one third inclined surface 425 and the rotational axis a1 is larger than an angle (e.g., 0 degrees) between the first contact surface 422b and the rotational axis a1, magnitude of the third rotational force component 711 may be smaller than magnitude of the fourth force 720. Since the magnitude of the third rotational force component 711 is smaller than the magnitude of the fourth force 720, the rotation of the rotating member 420 along the second rotational direction r2 may be limited while the plurality of first locking protrusions 422 are in contact with the plurality of second locking protrusions 452. Since the rotating member 420 linearly moves without rotating with respect to the locking structure 450 while the plurality of first locking protrusions 422 and the plurality of second locking protrusions 452 are in contact, generation of noise may be reduced (or suppressed) while the distance between the first housing 210 and the second housing 220 is being changed.

As described above, since the angle (e.g., the second angle g2 and/or 0 degrees) between each of the surfaces of the plurality of first locking protrusions 422 and the rotational axis a1 is smaller than the first angle g1 between each of the inclined surfaces 424 and 425 of the rotating member 420 and the rotational axis a1, the first adjusting module 400 according to an embodiment may provide a structure in which the distance between the first housing 210 and the second housing 220 may be adjusted without noise.

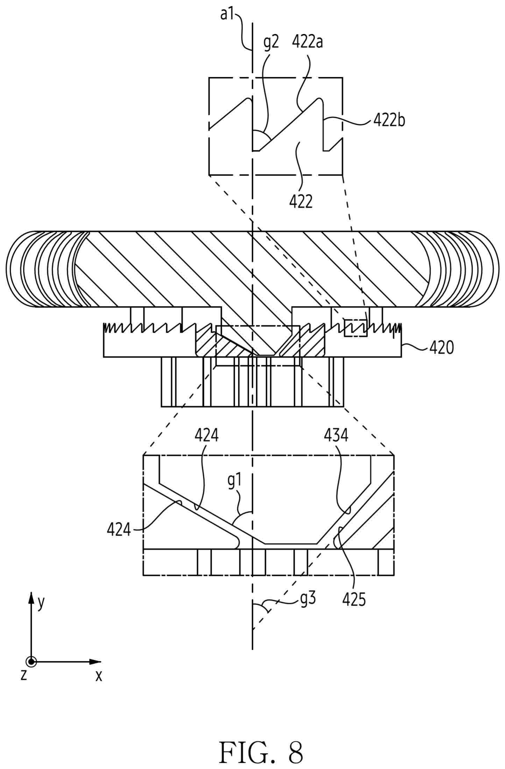

FIG. 8 is a cross-sectional view illustrating an example of a cross-section of an exemplary adjusting member and a rotating member according to an embodiment.

Referring to FIG. 8, according to an embodiment, at least one first inclined surface 424 and at least one third inclined surface 425 may be asymmetrically disposed with respect to a rotational axis a1. For example, an inclination between the at least one first inclined surface 424 and the rotational axis a1 may be different from an inclination between the at least one third inclined surface 425 and the rotational axis a1. For example, an angle between the at least one first inclined surface 424 and the rotational axis a1 may a first angle g1, and an angle between the at least one third inclined surface 425 and the rotational axis a1 may be a third angle g3. For example, the first angle g1 may be larger than the third angle g3, but is not limited thereto. For example, the first angle g1 may be smaller than the third angle g3.

According to an embodiment, the third angle g3 between the at least one third inclined surface 425 and the rotational axis a1 may be larger than an angle between the rotational axis a1 and each of surfaces 422a and 422b of a plurality of first locking protrusions 422. For example, the third angle g3 between the at least one third inclined surface 425 and the rotational axis a1 may be larger than a second angle g2 between the rotational axis a1 and a first guide surface 422a of each of the plurality of first locking protrusions 422. For example, the third angle g3 between the at least one third inclined surface 425 and the rotational axis a1 may be larger than an angle (e.g., 0 degrees) between the rotational axis a1 and a first contact surface 422b of each of the plurality of first locking protrusions 422.

According to an embodiment, at least one second inclined surface 433 and at least one fourth inclined surface 434 may be asymmetrically disposed with respect to the rotational axis a1. For example, an inclination between the at least one second inclined surface 433 and the rotational axis a1 may be different from an inclination between the at least one fourth inclined surface 434 and the rotational axis a1. For example, an angle between the at least one second inclined surface 433 and the rotational axis a1 may be the first angle g1, and an angle between the at least one fourth inclined surface 434 and the rotational axis a1 may be the third angle g3. For example, the first angle g1 may be larger than the third angle g3, but is not limited thereto. For example, the first angle g1 may be smaller than the third angle g3.

As described above, since the angle (e.g., the second angle g2, and/or 0 degrees) between each of the surfaces of the plurality of first locking protrusions 422 and the rotational axis a1 is smaller than the first angle g1 and the third angle g3 between each of the inclined surfaces 424 and 425 of a rotating member 420 and the rotational axis a1, a first adjusting module 400 according to an embodiment may provide a structure in which the rotating member 420 may be rotatable without noise.

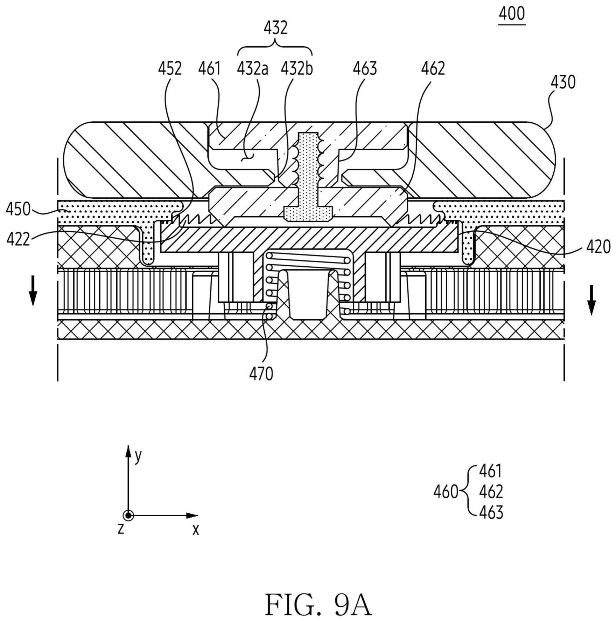

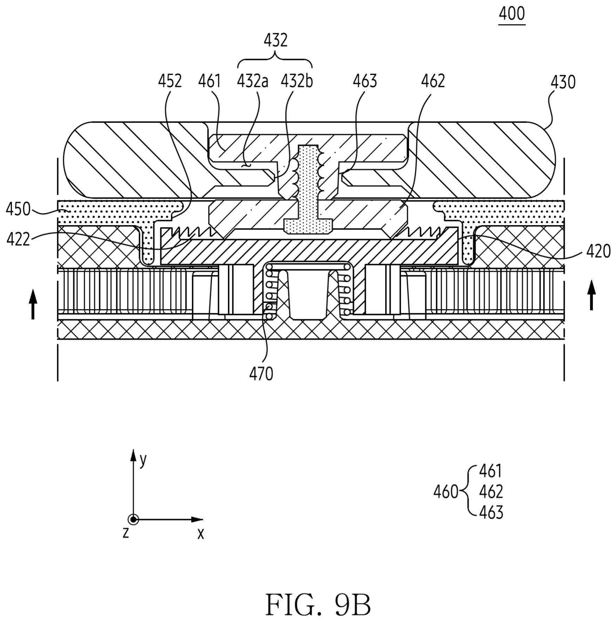

FIG. 9A is a cross-sectional view illustrating an example in which an exemplary first adjusting module according to an embodiment is cut along line A-A' of FIG. 5A, and FIG. 9B is a cross-sectional view illustrating an example in which an exemplary first adjusting module according to an embodiment is cut.

FIG. 9A indicates a first state of a rotating member 420 in which the rotating member 420 is engaged with a locking structure 450, and FIG. 9B indicates a second state of the rotating member 420 in which the rotating member 420 is spaced apart from the locking structure 450.

Referring to FIGS. 9A and 9B, a first opening 432 of an adjusting member 430 may include a first region 432a and a second region 432b.

According to an embodiment, the first region 432a may accommodate a first part 461. The first part 461 may be inserted into the first region 432a. A cross-sectional area of the first region 432a may correspond to a cross-sectional area of the first part 461. A thickness of the first region 432a may be greater than a thickness of the first part 461. A thickness of a component may indicate a distance in a first direction (e.g., a -y direction), and unless otherwise specified, corresponding expression may be substantially utilized in the same manner hereinafter. For example, the thickness of the first region 432a may correspond to a sum of the thickness of the first part 461 and a thickness of a portion of a connecting part 463. As the thickness of the first region 432a is thicker than the thickness of the first part 461, a button 460 may be movable with respect to the adjusting member 430.

According to an embodiment, the second region 432b may accommodate the connecting part 463. The second region 432b may be connected to the first region 432a. A cross-sectional area of the second region 432b may be smaller than the cross-sectional area of the first region 432a. For example, the cross-sectional area of the second region 432b may correspond to a cross-sectional area of the connecting part 463. For example, the cross-sectional area of the second region 432b may be smaller than the cross-sectional area of the first part 461. Since the cross-sectional area of the second region 432b is smaller than the cross-sectional area of the first part 461, a range of movement of the button 460 in the first direction (e.g., the -y direction) may be limited. For example, the cross-sectional area of the second region 432b may be smaller than a cross-sectional area of a second part 462. Since the cross-sectional area of the second region 432b is smaller than the cross-sectional area of the second part 462, movement of the button 460 to the outside of the adjusting member 430 may be suppressed.

According to an embodiment, when a state of the rotating member 420 is in the first state, the button 460 may be movable along the first direction (e.g., the -y direction). By the movement of the button 460 in the first direction (e.g., the -y direction), the state of the rotating member 420 may be changed from the first state to the second state. By the movement of the button 460 in the first direction (e.g., the -y direction), the rotating member 420 may move along the first direction (e.g., the -y direction). As the rotating member 420 moves along the first direction (e.g., the -y direction), a plurality of first locking protrusions 422 may be spaced apart from a plurality of second locking protrusions 452. As the plurality of first locking protrusions 422 and the plurality of second locking protrusions 452 are spaced apart from each other, the state of the rotating member 420 may be changed to the second state. While the rotating member 420 moves along the first direction (e.g., the -y direction), a deforming member 470 may be compressed. In a state in which the state of the rotating member 420 is changed to the second state by the button 460, the rotating member 420 may rotate along a first rotational direction r1 and/or a second rotational direction r2 with the adjusting member 430, by rotation of the adjusting member 430 in the first rotational direction r1 and/or the second rotational direction r2. As the rotating member 420 rotates, a plurality of moving members 410 engaged with the rotating member 420 may move. As the plurality of moving members 410 move, a distance between a first housing (e.g., the first housing 210 of FIG. 4A) and a second housing (e.g., the second housing 220 of FIG. 4A) may be changed (or adjusted).

According to an embodiment, the state of the rotating member 420 may be changed from the second state to the first state by the deforming member 470. For example, when a force transmitted to the button 460 is removed, the deforming member 470 may press the rotating member 420 in a second direction (e.g., a +y direction). As the rotating member 420 moves in the second direction (e.g., the +y direction), the plurality of first locking protrusions 422 and the plurality of second locking protrusions 452 may be engaged with each other. As the plurality of first locking protrusions 422 and the plurality of second locking protrusions 452 are engaged with each other, the state of the rotating member 420 may be changed to the first state.

As described above, since the state of the rotating member 420 may be changed by the button 460, the first adjusting module 400 according to an embodiment may provide a structure in which a user may easily adjust the distance between the first housing 210 and the second housing 220.

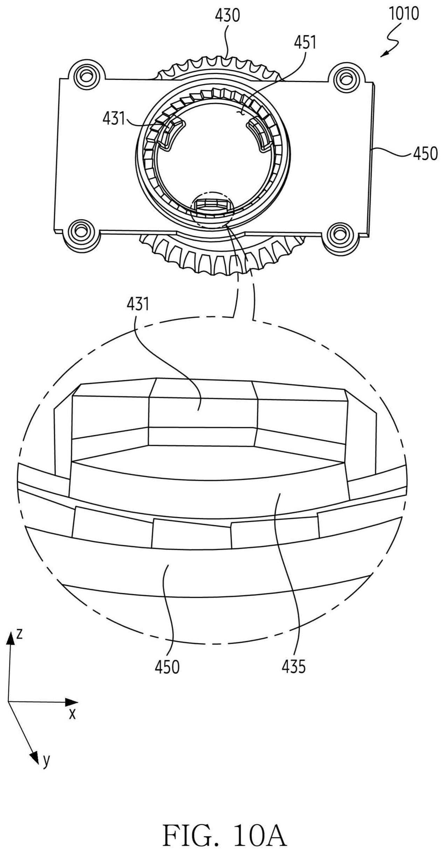

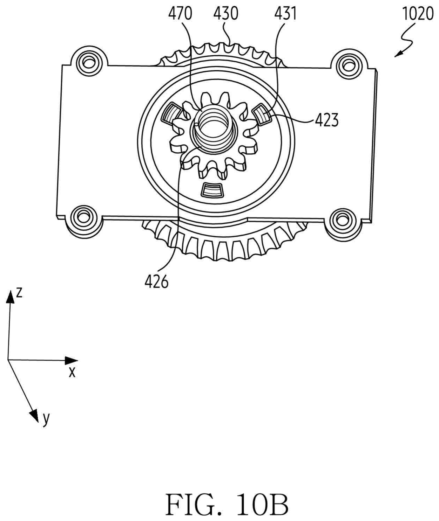

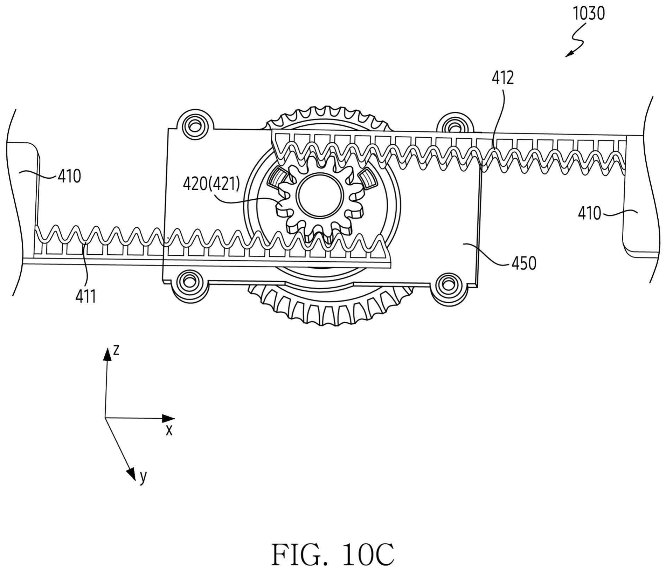

FIGS. 10A to 10C indicate an example of a method of assembling an exemplary first adjusting module according to an embodiment.

Referring to FIG. 10A, according to an embodiment, an adjusting member 430 may further include at least one hook 435. The at least one hook 435 may maintain coupling between a locking structure 450 and the adjusting member 430. For example, the at least one hook 435 may be in contact with the locking structure 450. For example, the at least one hook 435 may be hooked on the locking structure 450. The at least one hook 435 may be disposed on at least one guiding protrusion 431. The at least one hook 435 may be formed on the at least one guiding protrusion 431. The at least one hook 435 may protrude from the at least one guiding protrusion 431. For example, the at least one hook 435 may protrude from the at least one guiding protrusion 431 along a radial direction of the adjusting member 430. The number of the at least one hook 435 may correspond to the number of the at least one guiding protrusion 431, but is not limited thereto.

According to an embodiment, in a state 1010, the adjusting member 430 may be coupled to the locking structure 450. For example, the at least one guiding protrusion 431 of the adjusting member 430 may be inserted into a second opening 451 of the locking structure 450. As the at least one guiding protrusion 431 is inserted into the second opening 451, the at least one hook 435 formed on the at least one guiding protrusion 431 may be hooked on the locking structure 450.

According to an embodiment, in a state 1020, a rotating member 420 may be disposed on the adjusting member 430. The at least one guiding protrusion 431 of the adjusting member 430 may be inserted into at least one guiding groove 423 of the rotating member 420. The at least one guiding protrusion 431 may penetrate the at least one guiding groove 423.

According to an embodiment, in the state 1020, at least a portion of a deforming member 470 may be inserted into the rotating member 420. For example, the deforming member 470 may be inserted into an accommodation groove 426 of the rotating member 420. The accommodation groove 426 may be formed by at least a portion of the deforming member 470 being recessed inward.

According to an embodiment, in a state 1030, a plurality of moving members 410 and the rotating member 420 may be coupled. For example, a first rack gear 411 and a second rack gear 412 of the plurality of moving members 410 may be engaged with a pinion gear 421 of the rotating member 420. Although not illustrated in FIGS. 10A to 10C, after the plurality of moving members 410 are engaged, manufacture of a first adjusting module (e.g., the first adjusting module 400 of FIGS. 4A and 4B) may be completed as a supporting bracket (e.g., the supporting bracket 440 of FIG. 4B) is fastened to the locking structure 450.

An electronic device may include a structure for changing a distance between housings included in the electronic device to correspond to a user's body type, in order to stably maintain a state of being worn by the user. When a space in the electronic device is wasted due to the structure for adjusting the distance between the housings, the electronic device may not be able to include components for providing various contents to the user. When noise is generated by the structure for adjusting the distance, the user of the electronic device may feel discomfort. The electronic device may require a structure for adjusting a distance miniaturized in size, without causing noise.

An electronic device (e.g., the electronic device 101 of FIGS. 4A and 4B) is provided. According to an embodiment, the electronic device may comprise a first housing (e.g., the first housing 210 of FIG. 4A) covering a region of a user's body when the electronic device is worn by the user. According to an embodiment, the electronic device may comprise a second housing (e.g., the second housing 220 of FIG. 4A) covering another region of the user's body when the electronic device is worn by the user. According to an embodiment, the electronic device may comprise a plurality of moving members (e.g., the plurality of moving members 410 of FIG. 4B) movably coupling the first housing to the second housing. According to an embodiment, the electronic device may comprise a rotating member (e.g., the rotating member 420 of FIG. 4B) engaged with each of the plurality of moving members, rotatable based on a rotational axis, and including at least one first inclined surface (e.g., the first inclined surface 424 of FIGS. 6A and 6B) inclined with respect to the rotational axis. According to an embodiment, the electronic device may comprise an adjusting member (e.g., the adjusting member 430 of FIG. 4B), for rotating the rotating member, including at least one second inclined surface (e.g., the second inclined surface 433 of FIGS. 6A and 6B) facing the at least one first inclined surface. According to an embodiment, the electronic device may comprise a locking structure (e.g., the locking structure 450 of FIG. 5B) disposed between the rotating member and the adjusting member and configured to limit the rotation of the rotating member while in contact with the rotating member. According to an embodiment, the rotating member may be configured to be spaced apart from the locking structure, by moving in a direction parallel to the rotational axis, as the at least one first inclined surface slides with respect to the at least one second inclined surface by a force to rotate the adjusting member. According to an embodiment, the rotating member may be configured to move, after being spaced apart from the locking structure, the plurality of moving members by rotating to adjust a distance between the first housing and the second housing.

The electronic device according to an embodiment may provide a structure in which noise and damage generated while adjusting the distance between the first housing and the second housing may be reduced, since the rotating member moves only linearly while the rotating member and the locking structure are spaced apart by the force to rotate the adjusting member.

According to an embodiment, the rotating member may include a plurality of first locking protrusions (e.g., the plurality of first locking protrusions 422 of FIG. 5B). According to an embodiment, the locking structure may include a plurality of second locking protrusions (e.g., the plurality of second locking protrusions 452 of FIG. 5B) configured to limit the rotation of the rotating member by engaging with the plurality of first locking protrusions. According to an embodiment, an angle between the at least one first inclined surface and the rotational axis may be larger than an angle between a surface of each of the plurality of first locking protrusions in contact with the plurality of second locking protrusions and the rotational axis.

The electronic device according to an embodiment may provide a structure in which noise and damage generated while adjusting the distance between the first housing and the second housing may be reduced, since the angle between the at least one first inclined surface and the rotational axis is larger than the angle between a surface of each of the plurality of first locking protrusions in contact with the plurality of second locking protrusions and the rotational axis.

According to an embodiment, the rotating member may be rotatable along a first rotational direction and a second rotational direction opposite to the first rotational direction with respect to the second housing, and may include at least one third inclined surface (e.g., the at least one third inclined surface 425 of FIGS. 7A and 7B) inclined with respect to the rotational axis and the at least one first inclined surface. According to an embodiment, the adjusting member may include at least one fourth inclined surface (e.g., the at least one fourth inclined surface 434 of FIGS. 7A and 7B) facing the at least one third inclined surface and inclined with respect to the rotational axis and the at least one second inclined surface. According to an embodiment, the at least one first inclined surface may be in contact with the at least one second inclined surface while the rotating member rotates along the first rotational direction. According to an embodiment, the at least one third inclined surface may be in contact with the at least one fourth inclined surface while the rotating member rotates along the second rotational direction.

The electronic device according to an embodiment may provide a structure in which noise and damage generated while adjusting the distance between the first housing and the second housing may be reduced by a plurality of inclined surfaces that guide sliding between the adjusting member and the rotating member.

According to an embodiment, an angle between the rotational axis and the at least one first inclined surface may correspond to an angle between the rotational axis and the at least one third inclined surface.

The electronic device according to an embodiment may provide a structure in which noise and damage generated while adjusting the distance between the first housing and the second housing may be reduced by the at least one first inclined surface and the at least one third inclined surface, which are symmetrical with respect to the rotational axis.

According to an embodiment, an angle between the rotational axis and the at least one first inclined surface may be different from an angle between the rotational axis and the at least one third inclined surface.

The electronic device according to an embodiment may provide a structure in which noise and damage generated while adjusting the distance between the first housing and the second housing may be reduced by the at least one first inclined surface and the at least one third inclined surface, which are asymmetrical with respect to the rotational axis.

According to an embodiment, the rotating member may include at least one guiding groove (e.g., the at least one guiding groove 423 of FIG. 5B) including the at least one first inclined surface. According to an embodiment, the adjusting member may include at least one guiding protrusion (e.g., the at least one guiding protrusion 431 of FIG. 5B) including the at least one second inclined surface and at least partially inserted into the at least one guiding groove by penetrating the locking structure.

The electronic device according to an embodiment may provide a structure in which noise and damage generated while adjusting the distance between the first housing and the second housing may be reduced by the at least one guiding groove of the rotating member and the at least one guiding protrusion of the adjusting member.

According to an embodiment, the at least one guiding groove may include a plurality of guiding grooves arranged to be spaced apart from each other along a rotational direction of the adjusting member. According to an embodiment, the at least one guiding protrusion may include a plurality of guiding protrusions arranged to be spaced apart from each other along the rotational direction of the adjusting member.

The electronic device according to an embodiment may provide a structure in which noise and damage generated while adjusting the distance between the first housing and the second housing may be reduced by the plurality of guiding grooves and the plurality of guiding protrusions.

According to an embodiment, the adjusting member may include a hook (e.g., the at least one hook 435 of FIG. 10A) hooked on the locking structure by protruding from the at least one guiding protrusion along a radial direction of the adjusting member.

The electronic device according to an embodiment may provide a structure in which separation between the adjusting member and the locking structure may be reduced by the hook hooked on the locking structure.

According to an embodiment, the electronic device may further comprise a supporting bracket (e.g., the supporting bracket 440 of FIG. 4A) supporting the rotating member. According to an embodiment, a portion of each of the plurality of moving members may be disposed between the rotating member and the supporting bracket.

The electronic device according to an embodiment may provide a structure in which a range of movement of the rotating member in a first direction may be limited by the supporting bracket supporting the rotating member.

According to an embodiment, the electronic device may comprise a deforming member (e.g., the deforming member 470 of FIG. 5B) configured to press the rotating member in a direction toward the locking structure and disposed between the supporting bracket and the rotating member.

The electronic device according to an embodiment may provide a structure in which a position of the rotating member may be restored by the deforming member that presses the rotating member.

According to an embodiment, the supporting bracket may include a protruding portion (e.g., the protruding portion 441 of FIG. 5B) covered by the deforming member and accommodated in the rotating member by protruding toward the rotating member.

The electronic device according to an embodiment may provide a structure in which coupling between the rotating member and the supporting bracket is stable by the protruding portion protruding from the supporting bracket.

According to an embodiment, the supporting bracket may include a rib (e.g., the rib 442 of FIG. 5B) surrounding a portion of the rotating member and opened toward the plurality of moving members.

The electronic device according to an embodiment may provide a structure in which rotation of the rotating member with respect to the supporting bracket is stable by the rib at least partially surrounding the rotating member.

According to an embodiment, the electronic device may comprise a button (e.g., the button 460 of FIG. 5B) in contact with the rotating member by penetrating the adjusting member and movable in a direction toward the rotating member to separate the rotating member from the locking structure.

The electronic device according to an embodiment may provide a structure in which the rotating member and the locking structure may be easily separated by the button that is movable with respect to the adjusting member.

According to an embodiment, the button may include a first part (e.g., the first part 461 of FIG. 5B) exposed to the outside of the adjusting member. According to an embodiment, the button may include a second part (e.g., the second part 462 of FIG. 5B) in contact with the rotating member. According to an embodiment, the button may include a connecting part (e.g., the connecting part 463 of FIG. 5B) connecting the first part to the second part and having a cross-sectional area smaller than a cross-sectional area of each of the first part and the second part.

According to an embodiment, the plurality of moving members may include a first rack gear (e.g., the first rack gear 411 of FIGS. 4B and 4C), and a second rack gear (e.g., the second rack gear 412 of FIGS. 4B and 4C). According to an embodiment, the rotating member may include a pinion gear disposed between the first rack gear and the second rack gear and engaged with the first rack gear and the second rack gear.

The electronic device according to an embodiment may provide a structure in which the distance between the first housing and the second housing may be adjusted by the first rack gear and the second rack gear, which are linearly movable by rotation of the pinion gear.

A head mounted display device is provided. According to an embodiment, the head mounted display device may comprise a first housing surrounding a region of a user's body when the head mounted display device is worn by the user. According to an embodiment, the head mounted display device may comprise a second housing surrounding another region of the user's body when the head mounted display device is worn by the user. According to an embodiment, the head mounted display device may comprise a plurality of moving members movably coupling the first housing to the second housing. According to an embodiment, the head mounted display device may comprise a rotating member engaged with each of the plurality of moving members, rotatable based on a rotational axis and including at least one first inclined surface inclined with respect to the rotational axis. According to an embodiment, the head mounted display device may comprise an adjusting member, for rotating the rotating member, including at least one second inclined surface facing the at least one first inclined surface. According to an embodiment, the head mounted display device may comprise a locking structure interposed between the rotating member and the adjusting member and configured to limit the rotation of the rotating member when in contact with the rotating member. According to an embodiment, a state of the rotating member may change from a first state, in which the rotating member is in contact with the locking structure, to a second state, in which the rotating member is spaced apart from the locking structure, by linearly moving toward the plurality of moving members as the at least one first inclined surface slides with respect to the at least one second inclined surface by rotation of the adjusting member. According to an embodiment, the rotating member may be configured to move the plurality of moving members by rotating to adjust a distance between the first housing and the second housing, when the state of the rotating member is the second state.

The head mounted display device according to an embodiment may provide a structure in which noise and damage generated while adjusting the distance between the first housing and the second housing may be reduced, since the rotating member moves only linearly while the rotating member and the locking structure are spaced apart by a force to rotate the adjusting member.

According to an embodiment, the rotating member may include a plurality of first locking protrusions (e.g., the plurality of first locking protrusions 422 of FIG. 5B). According to an embodiment, the locking structure may include a plurality of second locking protrusions (e.g., the plurality of second locking protrusions 452 of FIG. 5B) configured to limit the rotation of the rotating member by engaging with the plurality of first locking protrusions. According to an embodiment, an angle between the at least one first inclined surface and the rotational axis may be larger than an angle between a surface of each of the plurality of first locking protrusions in contact with the plurality of second locking protrusions and the rotational axis.

The head mounted display device according to an embodiment may provide a structure in which noise and damage generated while adjusting the distance between the first housing and the second housing may be reduced, since the angle between the at least one first inclined surface and the rotational axis is larger than the angle between a surface of each of the plurality of first locking protrusions in contact with the plurality of second locking protrusions and the rotational axis.

According to an embodiment, the rotating member may be rotatable along a first rotational direction and a second rotational direction opposite to the first rotational direction with respect to the second housing, and may include at least one third inclined surface (e.g., the at least one third inclined surface 425 of FIGS. 7A and 7B) inclined with respect to the rotational axis and the at least one first inclined surface. According to an embodiment, the adjusting member may include at least one fourth inclined surface (e.g., the at least one fourth inclined surface 434 of FIGS. 7A and 7B) facing the at least one third inclined surface and inclined with respect to the rotational axis and the at least one second inclined surface. According to an embodiment, the at least one first inclined surface may be in contact with the at least one second inclined surface while the rotating member rotates along the first rotational direction. According to an embodiment, the at least one third inclined surface may be in contact with the at least one fourth inclined surface while the rotating member rotates along the second rotational direction.

The head mounted display device according to an embodiment may provide a structure in which noise and damage generated while adjusting the distance between the first housing and the second housing may be reduced by a plurality of inclined surfaces that guide sliding between the adjusting member and the rotating member.

According to an embodiment, the rotating member may include at least one guiding groove (e.g., the at least one guiding groove 423 of FIG. 5B) including the at least one first inclined surface. According to an embodiment, the adjusting member may include at least one guiding protrusion (e.g., the at least one guiding protrusion 431 of FIG. 5B) including the at least one second inclined surface and at least partially inserted into the at least one guiding groove by penetrating the locking structure.

The head mounted display device according to an embodiment may provide a structure in which noise and damage generated while adjusting the distance between the first housing and the second housing may be reduced by the at least one guiding groove of the rotating member and the at least one guiding protrusion of the adjusting member.

According to an embodiment, the head mounted display device may comprise a button (e.g., the button 460 of FIG. 5B) in contact with the rotating member by penetrating the adjusting member and movable in a direction toward the rotating member to separate the rotating member from the locking structure.

The head mounted display device according to an embodiment may provide a structure in which the rotating member and the locking structure may be easily separated by the button that is movable with respect to the adjusting member.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
a first housing (210) covering a region of a user's body when the electronic device (101) is worn by the user;
a second housing (220) covering another region of the user's body when the electronic device (101) is worn by the user;
a plurality of moving members (410) movably coupling the first housing (210) to the second housing (220);
a rotating member (420) engaged with each of the plurality of moving members (410), rotatable based on a rotational axis (a1), and including at least one first inclined surface (424) inclined with respect to the rotational axis (a1);
an adjusting member (430), for rotating the rotating member (420), including at least one second inclined surface (433) facing the at least one first inclined surface (424); and
a locking structure (450) disposed between the rotating member (420) and the adjusting member (430) and configured to limit the rotation of the rotating member (420) while in contact with the rotating member (420);
wherein the rotating member (420) is configured to:
be spaced apart from the locking structure (450), by moving in a direction parallel to the rotational axis (a1), as the at least one first inclined surface (424) slides with respect to the at least one second inclined surface (433) by a force to rotate the adjusting member (430); and
move, after being spaced apart from the locking structure (450), the plurality of moving members (410) by rotating to adjust a distance between the first housing (210) and the second housing (220).

2. The electronic device (101) of claim 1,
wherein the rotating member (420) further includes a plurality of first locking protrusions (422),
wherein the locking structure (450) further includes a plurality of second locking protrusions (452) configured to limit the rotation of the rotating member (420) by engaging with the plurality of first locking protrusions (422), and
wherein an angle between the at least one first inclined surface (424) and the rotational axis (a1) is larger than an angle between a surface of each of the plurality of first locking protrusions (422) in contact with the plurality of second locking protrusions (452) and the rotational axis (a1).

3. The electronic device (101) of any one of claim1 or claim2,
wherein the rotating member (420) is rotatable along a first rotational direction and a second rotational direction opposite to the first rotational direction with respect to the second housing (220) and further includes at least one third inclined surface (425) inclined with respect to the rotational axis (a1) and the at least one first inclined surface (424),
wherein the adjusting member (430) further includes at least one fourth inclined surface (434) facing the at least one third inclined surface (425) and inclined with respect to the rotational axis (a1) and the at least one second inclined surface (433),
wherein the at least one first inclined surface (424) is in contact with the at least one second inclined surface (433) while the rotating member (420) rotates along the first rotational direction, and
wherein the at least one third inclined surface (425) is in contact with the at least one fourth inclined surface (434) while the rotating member (420) rotates along the second rotational direction.

4. The electronic device (101) of claim 3,
wherein an angle between the rotational axis (a1) and the at least one first inclined surface (424) corresponds to an angle between the rotational axis (a1) and the at least one third inclined surface (425).

5. The electronic device (101) of claim 3,
wherein an angle between the rotational axis (a1) and the at least one first inclined surface (424) is different from an angle between the rotational axis (a1) and the at least one second inclined surface (433).

6. The electronic device (101) of any one of claims 1 to 5,
wherein the rotating member (420) further includes at least one guiding groove (423) including the at least one first inclined surface (424), and
wherein the adjusting member (430) includes at least one guiding protrusion (431) including the at least one second inclined surface (433) and at least partially inserted into the at least one guiding groove (423) by penetrating the locking structure (450).

7. The electronic device (101) of claim 6,
wherein the at least one guiding groove (423) includes a plurality of guiding groove (423)s arranged to be spaced apart from each other along a rotational direction of the adjusting member (430), and
wherein the at least one guiding protrusion (431) includes a plurality of guiding protrusions (431) arranged to be spaced apart from each other along the rotational direction of the adjusting member (430).

8. The electronic device (101) of claim 6,
wherein the adjusting member (430) further includes a hook (435) hook (435)ed on the locking structure (450) by protruding from the at least one guiding protrusion (431) along a radial direction of the adjusting member (430).

9. The electronic device (101) of any one of claims 1 to 8, further comprising a supporting bracket (440) supporting the rotating member (420), and
wherein a portion of each of the plurality of moving members (410) is disposed between the rotating member (420) and the supporting bracket (440).

10. The electronic device (101) of claim 9, further comprising a deforming member configured to press the rotating member (420) in a direction toward the locking structure (450) and disposed between the supporting bracket (440) and the rotating member (420).

11. The electronic device (101) of claim 10,
wherein the supporting bracket (440) includes a protruding portion (441) covered by the deforming member and accommodated in the rotating member (420) by protruding toward the rotating member (420).

12. The electronic device (101) of claim 9,
wherein the supporting bracket (440) includes a rib (442) surrounding a portion of the rotating member (420) and opened toward the plurality of moving members (410).

13. The electronic device (101) of any one of claims 1 to 12, further comprising a button (460) in contact with the rotating member (420) by penetrating the adjusting member (430) and movable in a direction toward the rotating member (420) to separate the rotating member (420) from the locking structure (450).

14. The electronic device (101) of claim 13,
wherein the button (460) includes:
a first part (461) exposed to the outside of the adjusting member (430);
a second part (462) in contact with the rotating member (420); and
a connecting part (463) connecting the first part (461) to the second part (462) and having a cross-sectional area smaller than a cross-sectional area of each of the first part (461) and the second part (462).

15. The electronic device (101) of any one of claims 1 to 14,
wherein the plurality of moving members (410) further includes a first rack gear (411) and a second rack gear (412), and
wherein the rotating member (420) includes a pinion gear (421) disposed between the first rack gear (411) and the second rack gear (412) and engaged with the first rack gear (411) and the second rack gear (412).
